# EUROPEAN PATENT APPLICATION

(11) **EP 4 768 227 A1**
(43) Date of publication of application: **01.07.2026**
(21) Application number: 25213998.5
(22) Date of filing: 06.11.2025
(51) Int. Cl.: B29C 64/153, B22F 10/14, B22F 10/37, B22F 12/67, B29C 64/165, B29C 64/214, B29C 64/236, B29C 64/393, B33Y 10/00, B33Y 30/00

(54) **RECOATER ASSEMBLY FOR ADDITIVE MANUFACTURING SYSTEMS**

(30) Priority: 31.12.2024 US 202419006512
(71) Applicant: General Electric Company, Cincinnati, Ohio 45215 (US)
(72) Inventor: STERLE, John Thomas, Evendale, OH 45215 (US)
(74) Representative: Hafner & Kohl PartmbB

(57) **Abstract**

A recoater assembly (118) is movable across a working surface (116) in a forward stroke and in a return stroke and includes a powder plow (152). One or more actuators (160) are coupled to the powder plow (152) and are actuable to provide vertical movement of the powder plow (152) with respect to the working surface (116). A controller (124) is operable to control the one or more actuators (160) to maintain the powder plow (152) in a retracted position during the forward stroke, lower the powder plow (152) to an extended position when the powder plow (152) is at or near a return area, enable the powder plow (152) to be lifted from the extended position to a partially retracted position a predefined vertical distance from the working surface (116), and maintain the powder plow (152) in the partially retracted position while traversing a portion of the working surface

## Description

### FIELD

The present disclosure generally pertains to additive manufacturing machines and systems.

### BACKGROUND

Three-dimensional objects may be additively manufactured using an additive manufacturing machine. One type of additive manufacturing is binder jetting. In binder jet additive manufacturing, a liquid binder is used to join particles of a powder build material to form a three-dimensional object. Another additive manufacturing technique includes projecting an energy beam onto the powder build material. The energy beam is generally moved across the powder build material such that a portion of the powder build material fuses, thereby forming a layer of the three-dimensional object. A recoater device may be used to deposit the powder build material onto a build surface and spread the powder build material over the build surface by passing a recoater blade or recoat roller over the powder build material. The recoater blade or recoat roller smooths the powder build material to provide a layer of powder build material having a uniform thickness.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 schematically depicts an exemplary additive manufacturing system in accordance with an embodiment of the present disclosure.
FIG. 2A schematically depicts an isometric view of exemplary recoater assembly in accordance with embodiments of the present disclosure.
FIG. 2B schematically depicts a side view of a portion of a recoater assembly in accordance with embodiments of the present disclosure.
FIG. 2C schematically depicts a side view of a portion of a powder plow lift mechanism used in connection with a recoater assembly in accordance with embodiments of the present disclosure.
FIG. 3A schematically depicts an exemplary recoater assembly at a defined stroke position in accordance with an embodiment of the present disclosure.
FIG. 3B schematically depicts an exemplary recoater assembly at another defined stroke position in accordance with an embodiment of the present disclosure.
FIG. 3C schematically depicts an exemplary recoater assembly at yet another defined stroke position in accordance with an embodiment of the present disclosure.
FIG. 4 schematically depicts an exemplary recoater assembly in accordance with an embodiment of the present disclosure.
FIG. 5A schematically depicts an isometric view of a portion of a recoater assembly in accordance with embodiments of the present disclosure.
FIG. 5B schematically depicts a side view of a portion of a recoater assembly in accordance with embodiments of the present disclosure.
FIG. 5C schematically depicts a side view of a portion of a powder plow lift mechanism used in connection with a recoater assembly in accordance with embodiments of the present disclosure.
FIG. 5D schematically depicts a side view of a portion of a recoater assembly in accordance with embodiments of the present disclosure.
FIG. 5E schematically depicts a side view of a portion of a powder plow lift mechanism used in connection with a recoater assembly in accordance with embodiments of the present disclosure.
FIG. 6 schematically depicts a top view of a portion of a recoater assembly in accordance with embodiments of the present disclosure.
FIG. 7A is a schematic diagram depicting an isometric view of a portion of the recoater assembly viewed from a downward perspective in accordance with embodiments of the present disclosure.
FIG. 7B is a schematic diagram depicting an isometric view of a portion of a recoater assembly viewed from an upward perspective in accordance with embodiments of the present disclosure.
FIG. 8 is a flow diagram depicting an embodiment of a method of performing a recoating process for additively manufacturing a three-dimensional object in accordance with embodiments of the present disclosure.
FIG. 9 provides an example computing system according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components. Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

Suitable additive manufacturing techniques in accordance with the present disclosure include, for example, Fused Deposition Modeling (FDM), Selective Laser Sintering (SLS), 3D printing such as by inkjets, laser jets, and binder jets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 micrometers (µm) and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

In this regard, utilizing additive manufacturing methods, even multi-part components may be formed as a single piece of continuous material, and may thus include fewer sub-components and/or joints compared to prior designs. The integral formation of these multi-part components through additive manufacturing may advantageously improve the overall assembly process. For example, the integral formation reduces the number of separate parts that must be assembled, thus reducing associated time and overall assembly costs. Additionally, existing issues with, for example, leakage, joint quality between separate parts, and overall performance may advantageously be reduced.

Also, the additive manufacturing methods described above enable much more complex and intricate shapes and contours of the components described herein. For example, such components may include thin additively manufactured layers and unique fluid passageways with integral mounting features. In addition, the additive manufacturing process enables the manufacture of a single component having different materials such that different portions of the component may exhibit different performance characteristics. The successive, additive nature of the manufacturing process enables the construction of these novel features. As a result, the components described herein may exhibit improved functionality and reliability.

Unlike laser melting and laser sintering additive manufacturing techniques, which heat the material to consolidate and build layers of the material to form a printed part (e.g., metal or ceramic part), binder jetting uses a chemical binder to bond particles of the material into layers that form a green body of the printed part. As defined herein, the green body of the printed part is intended to denote a printed part that has not undergone heat treatment to remove the chemical binder. Chemical binding has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering) to form a consolidated part. In certain post printing processes, the green body part may undergo a de-powdering process. The de-powdering process removes portions of the powder that have not been bound (e.g., adhered) by the chemical binder.

The present disclosure generally provides an apparatus and technique for recoating and/or managing a powder build material over a working surface for an additive manufacturing system. Embodiments of the present disclosure provide electro-mechanical embodiments of a recoater assembly for managing and containing powder during the powder recoat process using a 2-stage motion sequence. The recoater assembly is a hybrid of both mechanical and pneumatic pressure actuation with sensor detection of powder plow positioning at two different stages of motion. The recoater assembly substantially prevents powder build material from building up and migrating to areas of the additive manufacturing machine that will cause damage or failure of various components such as, by way of non-limiting example, printhead and cleaning station components in a binder jet type additive manufacturing machine. Embodiments of the recoater assembly according to the present disclosure include wing elements positioned to direct the powder build material to stay within process boundaries to prevent significant migration of the powder build material to outer areas that would result in unwanted buildup of the powder build material. Additionally, embodiments of the recoater assembly according to the present disclosure include a powder plow controlled during a return stroke using a two-stage motion sequence such that a lead or front powder plow is placed in close proximity to a working surface at or near the end of a forward stroke and, for a defined distance at or near a beginning of a return stroke, pulls the powder build material in the return direction toward a powder escapement to be reused during a following recoat. The lead or front powder plow is also gradually lifted a defined distance away from the working surface during a beginning portion of the return stroke to prevent a height of the powder build material from exceeding a defined dimension above the working surface. Embodiments of the present disclosure provide a recoater assembly that is a hybrid of both mechanical and pneumatic pressure actuation with sensor detection enabling greater control over powder plow positioning. Additionally, embodiments of the present disclosure provide a mechanical lifting mechanism to gradually lift the front powder plow over a defined span near the beginning of the return stroke, and a proximity sensor may be used to determine or verify a vertical position of the front powder plow to initiate a pneumatic control of the front powder plow to redistribute the powder build material during the return stroke.

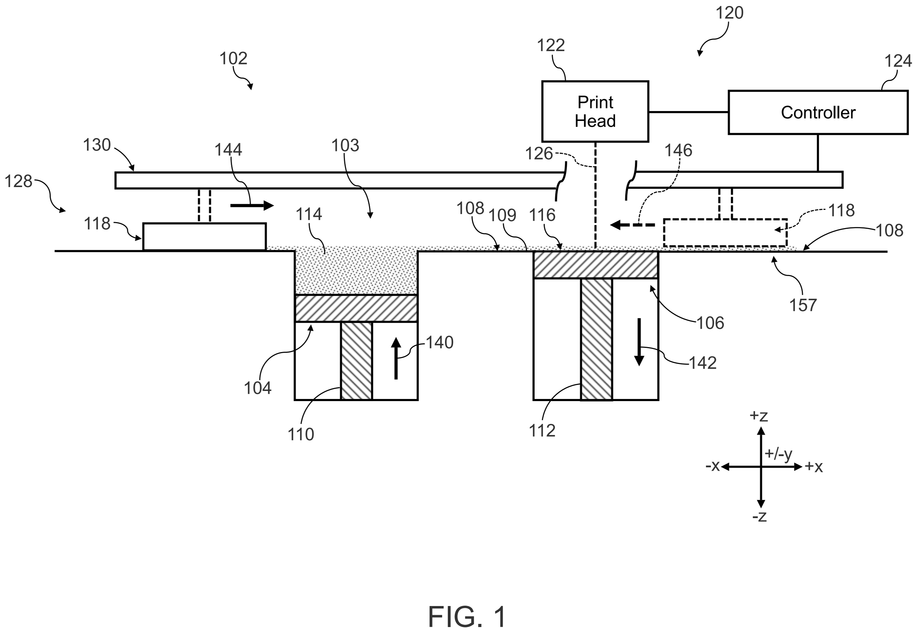

Referring now to FIG. 1, the presently disclosed subject matter will now be described in further detail. FIG. 1 schematically depicts an exemplary additive manufacturing system 100 according to the present disclosure. In exemplary embodiments, the additive manufacturing system 100 may be used to additively manufacture or build one or more additively manufactured objects. The additive manufacturing system 100 may include one or more additive manufacturing machines 102. In the illustrated embodiment, the additive manufacturing machine 102 comprises a binder jet additive manufacturing machine. However, it should be understood that the additive manufacturing machine 102 may be other types of additive manufacturing machines such as, by way of non-limiting example, a laser-based additive manufacturing machine. In the illustrated embodiment, the additive manufacturing machine 102 includes a dosing station 103 and a build platform 106. The dosing station 103 includes a supply platform 104 coupled to an actuator 110. The actuator 110 is actuatable in the vertical direction (i.e., the +/-Z direction of the coordinate axes depicted in FIG. 1) such that the supply platform 104 may be raised or lowered. The build platform 106 is located adjacent to the supply platform 104 and, like the supply platform 104, is coupled to an actuator 112. The build platform 106 may be integrated with the additive manufacturing machine 102 or may be a component that is separately insertable into the additive manufacturing machine 102. For example, the build platform 106 may be a module that is available separately from the additive manufacturing machine 102. The build platform 106 may be a platen or build plate, a fabrication/print bed, a glass plate, or another component upon which a three-dimensional object may be formed. In exemplary embodiments, the build platform 106 is at least partially surrounded by a table 108. The table 108 may be a stationary structure providing a boundary positioned around at least a portion of the build platform 106. The table 108 defines an upwardly facing surface 109 that functions as a reference surface for defining a height of a powder build material applied to the build platform 106 or a previously applied layer of build material. The three-dimensional object is formed on a layer-by-layer basis on the build platform 106. In an exemplary embodiments, thin layers of powder build material are sequentially applied to a working surface 116 of the additive manufacturing machine 102. The working surface 116 defines at least a portion of the build platform 106 or a previously applied layer of the powder build material 114 receiving a coating or layer of the powder build material 114. The working surface 116 may also include at least a portion of the table 108 located outside a boundary of the build platform 106 that may also receive at least a portion of the powder build material 114 resulting from the application of the powder build material 114. At least a portion of the build platform 106, such as an upwardly facing surface of the build platform 106 or a previously applied layer of the powder build material, defines a build plane. As used herein, the term "build plane" refers to a surface upon which powder build material is consolidated during an additive manufacturing process. Generally, the surface of a powder bed defines the build plane. During consolidation of a respective layer of the powder bed, a previously consolidated portion of the respective layer may define a portion of the build plane, and/or prior to distributing powder build material across the build platform 106, an upwardly facing surface of the build platform 106 that supports the powder bed generally defines the build plane. The build platform 106 is located adjacent to the dosing station 103 along the working axis of the additive manufacturing machine 102 (e.g., an axis extending parallel to the +/-X axis of the coordinate axes depicted in FIG. 1). The actuator 112 is actuatable in the vertical direction such that the build platform 106 may be raised or lowered with respect to the table 108.

In the illustrated embodiment, a recoater assembly 118 may be traversed along the working axis of the additive manufacturing machine 102 with one or more actuator assemblies 130 such that the recoater assembly 118 is movable in a forward stroke in a direction 144 from a home position 128 over the supply platform 104 and over the build platform 106, and back again during a return stroke in a direction 146 opposite the forward direction 144 from a return area 157, ultimately returning to the home position 128. The one or more actuator assemblies 130 may be in the form of, by way of non-limiting example, a track or rail system, one or more electro-mechanical, pneumatic, and/or hydraulic actuators or motors, or other mechanisms to facilitate movement of the recoater assembly 118 along the working axis of the additive manufacturing machine 102.

In operation, a powder build material 114 is positioned on the supply platform 104. The supply platform 104 is actuated to present an amount of the powder build material 114 in the path of the recoater assembly 118. The recoater assembly 118 is then actuated along the working axis of the additive manufacturing machine 102 from the home position 128 towards the build platform 106 during the forward stroke in the forward direction 144. As the recoater assembly 118 traverses over the supply platform 104 towards the build platform 106, the recoater assembly 118 distributes the powder build material 114 in the path of the recoater assembly 118 from the supply platform 104 to the build platform 106. In exemplary embodiments, the recoater assembly 118 may include a roller (not explicitly shown) positioned with respect to the table 108 such that the recoater assembly 118 meters the powder build material 114 to a defined height with respect to the table 108 during the forward stroke in the direction 144. At the end of the forward stroke, the recoater assembly 118 begins the return stroke in the return direction 146 to manage and/or contain the powder build material 114 within a defined boundary with respect to the working surface 116 to prevent migration of the power build material 114 to unwanted areas and/or prevent unwanted buildup of the powder build material 114.

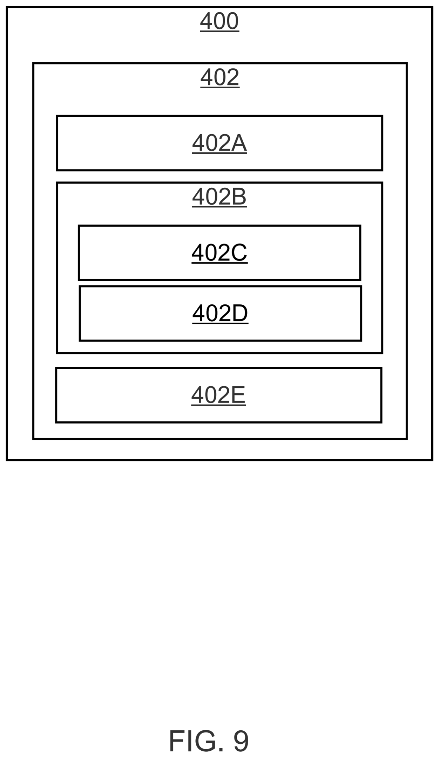

In the illustrated embodiment, the additive manufacturing machine 102 includes a print system 120 including at least one print head 122 movable across the build platform 106, and a controller 124 communicatively coupled to the print head 122 and/or the recoater assembly 118. The print head 122 is configured to dispense a binder 126 to the one or more layers of the powder build material 114 (e.g., on the build platform 106). The controller 124 is configured to control the movement of the print head 122 and the delivery of the binder 126 in a defined two-dimensional pattern to form one or more three-dimensional parts or objects on a layer-by-layer basis on the build platform 106. The controller 124 may also be configured to control the movement of the recoater assembly 118 along the working axis of the additive manufacturing machine 102 and various operational aspects of the recoater assembly 118. The controller 124 is configured to generate control signals for operating the print head 122 and/or the recoater assembly 118, as well as potentially other components of the additive manufacturing system 100. The controller 124 may be configured similar to exemplary computing devices of the computing system 400 described below with reference to FIG. 9.

While the recoater assembly 118 is in the home position 128, the supply platform 104 is actuated in an upward vertical direction 140 (e.g., in the +Z direction of the coordinate axes depicted in FIG. 1) to present additional amounts of the powder build material 114 in the path of the recoater assembly 118. The build platform 106 is actuated in a downward vertical direction 142 (e.g., in the -Z direction of the coordinate axes depicted in FIG. 1) to prepare the build platform 106 to receive a new layer of the powder build material 114 from the supply platform 104. This sequence of steps is repeated multiple times to build a three-dimensional object on the build platform 106 in a layer-wise manner.

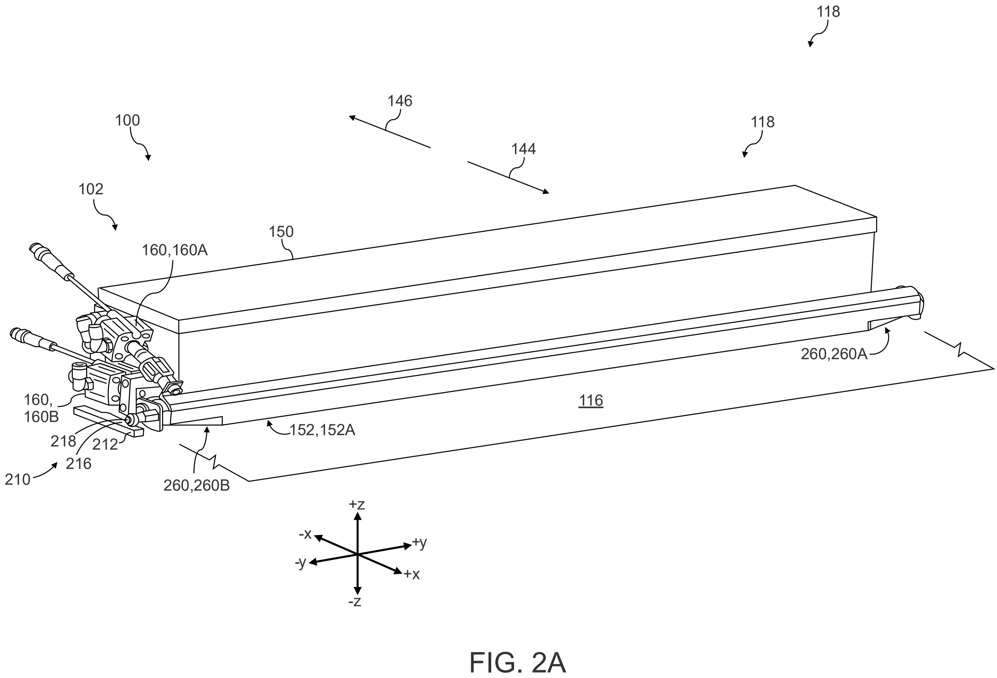

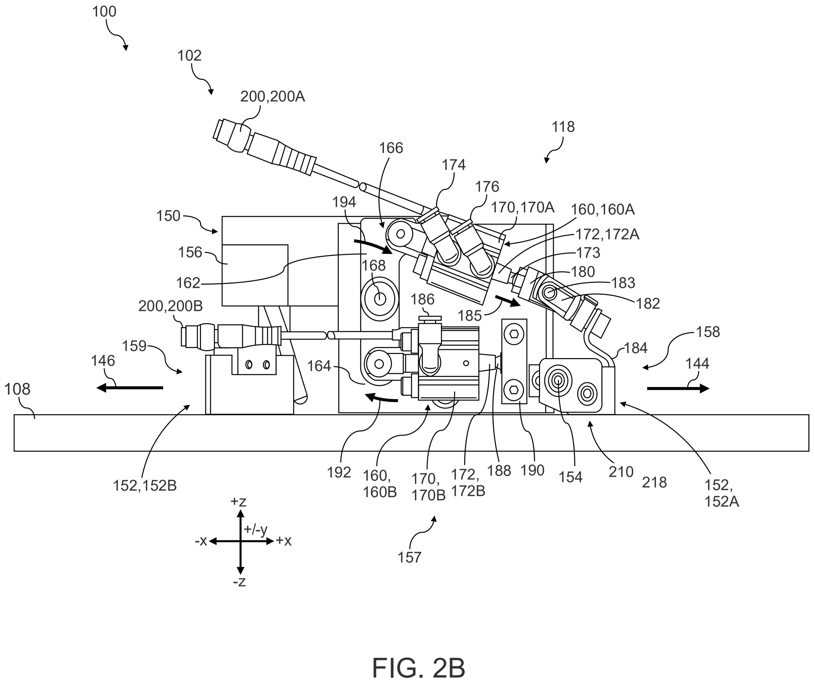

Referring to FIGS. 2A and 2B, an embodiment of the recoater assembly 118 is depicted in accordance with an embodiment of the present disclosure. FIG. 2A is a schematic diagram depicting an isometric view of a portion of the recoater assembly 118 in accordance with an embodiment of the present disclosure, and FIG. 2B is a schematic diagram depicting a side view of the recoater assembly 118 of FIG. 2A in accordance with an embodiment of the present disclosure. In the illustrated embodiment, the recoater assembly 118 includes a base member 150 movable along the working axis of the additive manufacturing machine 102 (e.g., an axis extending parallel to the +/-X axis of the coordinate axes depicted in FIGS. 2A and 2B). That is, the base member 150 is movable in the forward stroke in the direction 144 and in the return stroke in the direction 146 (e.g., as described above in connection with FIG. 1). In the illustrated embodiment, the recoater assembly 118 includes one or more powder plows 152 movably coupled to the base member 150. The one or more powder plows 152 are configured to manage and/or contain the powder build material 114 (FIG. 1) within a defined boundary with respect to the working surface 116 while the recoater assembly 118 moves in the return stroke in the direction 146 to prevent migration of the power build material 114 (FIG. 1) to unwanted areas and/or prevent unwanted buildup of the powder build material 114 (FIG. 1). In exemplary embodiments, the one or more powder plows 152 are movably coupled to the base member 150 to enable the one or more powder plows 152 to be raised or elevated with respect to the working surface 116 (e.g., with respect to at least a portion of the table 108 and/or at least a portion of the build platform 106 (FIG. 1)) in the +Z direction of the coordinate axes depicted in FIGS. 2A and 2B or be lowered with respect to the working surface 116 (e.g., with respect to at least a portion of the table 108 and/or at least a portion of the build platform 106 (FIG. 1)) in the -Z direction of the coordinate axes depicted in FIGS. 2A and 2B. In the illustrated embodiment, the one or more powder plows 152 include a first powder plow 152A and a second powder plow 152B disposed in spaced apart relationship to each other with respect to the X axis of the coordinate axes depicted in FIGS. 2A and 2B. The first powder plow 152A may be referred to as the front powder plow 152A and is the leading powder plow when the recoater assembly 118 is moved in the forward stroke in the direction 144. The second powder plow 152B may be referred to as the back powder plow 152B and is the trailing powder plow when the recoater assembly 118 is moved in the forward stroke in the direction 144. In the illustrated embodiment, the front powder plow 152A is pivotably coupled to the base member 150 about a pivot axis 154 to enable rotational movement of the front powder plow 152A with respect to the base member 150. In the illustrated embodiment, the back powder plow 152B is slidably coupled to the base member 150 to enable vertical movement of the back powder plow 152B with respect to the base member 150 (e.g., the +/-Z directions of the coordinate axes depicted in FIGS. 2A and 2B) via one or more actuators 156. In exemplary embodiments, the front powder plow 152A and the back powder plow 152B are movable independently from each other, and the movement of the front powder plow 152A and the back powder plow 152B may be controlled via one or more of the controllers 124 (FIG. 1).

FIG. 2B depicts the recoater assembly 118 in the return area 157 with respect to the working surface 116. The return area 157 may be a location along the working axis of the additive manufacturing machine 102 at or near the end of the forward stroke and/or at or near the beginning of the return stroke. In exemplary embodiments, FIG. 2B depicts the position of the front powder plow 152A and the back powder plow 152B at or near the end of the forward stroke and/or at or near the beginning of the return stroke in the return area 157. In exemplary embodiments, at the end of the forward stroke and/or the beginning of the return stroke, the recoater assembly 118 is positioned such that one or more of the front powder plow 152A and the back powder plow 152B are located beyond the boundary of the build platform 106 in the +X direction. In other words, in exemplary embodiments, in the return area 157, the recoater assembly 118 is positioned such that one or more of the front powder plow 152A and the back powder plow 152B are positioned over the table 108 such that, for the return stroke, one or more of the front powder plow 152A and the back powder plow 152B move in the -X direction from a position over the table 108 toward the build platform 106. However, it should be understood that the return area 157 may be otherwise defined with respect to the working surface 116 along the X axis (e.g., such that one or more of the front powder plow 152A and/or the back powder plow 152B are positioned over the build platform 106 at or near the begging of the return stroke). In the illustrated embodiment, the front powder plow 152A is depicted in a lowered or extended position 158. In the extended position 158, at least a portion of the front powder plow 152A is positioned in contact with the working surface (e.g., in contact with the table 108 and/or the build platform 106 (FIG. 1)) or within a defined distance in the +Z direction from the table 108 and/or the build platform 106 (FIG. 1). In exemplary embodiments, by way of non-limiting example, in the extended position 158, the front powder plow 152A is positioned in contact with the table 108 and/or the build platform 106 (FIG. 1) or within 0.25 millimeters (mm) of the table 108 and/or the build platform 106 (FIG. 1) in the +Z direction. Additionally, in the illustrated embodiment, the back powder plow 152B is depicted in a lowered or extended position 159. In the extended position 159, at least a portion of the back powder plow 152B is positioned in contact with the table 108 and/or the build platform 106 (FIG. 1). In exemplary embodiments, the front powder plow 152A and the back powder plow 152B are moved to the respective extended positions 158, 159 from retracted positions located further above the table 108 and/or build platform 106 during the forward stroke, at or near the end of the forward stroke, and/or at or near the beginning of the return stroke. In other words, as the recoater assembly 118 is moved from the dosing station 103 (FIG. 1) toward the build platform 106 (FIG. 1) during the forward stoke in the direction 144, the front powder plow 152A and the back powder plow 152B are located in elevated positions with respect to the table 108 and/or build platform 106 and are likely not in contact with the powder build material 114 (FIG. 1) in the forward stroke. At or near the end of the forward stroke and/or at or near the beginning of the return stroke, the front powder plow 152A and the back powder plow 152B are lowered to the respective extended positions 158, 159 for the return stroke in the direction 146.

In the illustrated embodiment, the recoater assembly 118 includes one or more actuators 160 that are actuable to cause vertical movement of the front powder plow 152A with respect to the table 108 and/or build platform 106 (e.g., the +/-Z directions of the coordinate axes depicted in FIGS. 2A and 2B). In FIGS. 2A and 2B, the recoater assembly includes an arm 162 having a first end portion 164 and a second end portion 166 opposite the first end portion 164. The arm 162 is pivotably coupled to the base member 150 at a location of the arm 162 between the first and second end portions 164, 166 about a pivot axis 168. A first actuator 160A is coupled between the base member 150 and the first end portion 164. A second actuator 160B is coupled between the second end portion 166 and the front powder plow 152A. In the illustrated embodiment, the actuators 160A, 160B are pneumatic cylinders 170A, 170B, respectively, each having a respective piston rod 172A, 172B that is extendable/retractable based on a supply of a pressurized fluid to the respective pneumatic cylinders 170A, 170B. However, it should be understood that, additionally or alternatively, one or more of the actuators 160 may be electronically controlled actuators.

In the illustrated embodiment, the first actuator 160A is a dual action or double acting actuator such that a supply of pressurized fluid is provided to the pneumatic cylinder 170A via fluid supply ports 174 and 176. In the illustrated embodiment, an end 173 of the piston rod 172A is coupled to a connecting rod 180, and a clevis 182 is pivotably coupled to the connecting rod 180 about a pivot axis 183. The clevis 182 is coupled to the front powder plow 152A via an extension arm 184 of the front powder plow 152A. The first actuator 160A is fixedly coupled to the second end portion 166 of the arm 162 such that the extension and retraction of the piston rod 172A causes pivoting movement of the front powder plow 152A about the pivot axis 154. In operation, a pressurized fluid provided to the fluid supply port 174 causes the piston rod 172A to extend in the direction 185 with respect to the first actuator 160A. Correspondingly, a pressurized fluid provided to the fluid supply port 176 causes the piston rod 172A to retract in a direction opposite the direction 185 with respect to the first actuator 160A. Thus, extension of the piston rod 172A in the direction 185 causes the front powder plow 152A to be lowered in the -Z direction of the coordinate axes depicted in FIGS. 2A and 2B, and retraction of the piston rod 172A in a direction opposite the direction 185 causes the front powder plow 152A to be raised or elevated in the +Z direction of the coordinate axes depicted in FIGS. 2A and 2B.

In exemplary embodiments, the second actuator 160B is a spring return actuator, and a supply of pressurized fluid is provided to the pneumatic cylinder 170B via a fluid supply port 186. In the illustrated embodiment, an end 188 of the piston rod 172B is fixedly coupled to the base member 150 via a support member 190. Thus, in operation, because the end 188 of the piston rod 172B is in a substantially fixed position with respect to the base member 150, when a pressurized fluid is supplied to the fluid supply port 186, extension of the piston rod 172B via the pressurized fluid causes the second actuator 160B to move in the -X direction of the coordinate axes depicted in FIGS. 2A and 2B. Correspondingly, a release or cessation of the pressurized fluid to the fluid supply port 186 causes the second actuator 160B to move in the -X direction of the coordinate axes depicted in FIGS. 2A and 2B based on the spring return aspect of the second actuator 160B.

Thus, in operation, during the forward stroke of the recoater assembly 118 in the direction 144, pressurized fluid is provided to the fluid supply port 176 to cause the piston rod 172A to be in retracted position (e.g., a direction opposite the direction 185), causing the front powder plow 152A to be in an elevated position above or away from the table 108 and/or build platform 106 in the +Z direction of the coordinate axes depicted in FIGS. 2A and 2B. During the forward stroke of the recoater assembly 118 in the direction 144, an absence of a pressurized fluid to the fluid supply port 186 causes the piston rod 172B to be in a reacted position.

At or near the end of the forward stroke and/or at or near the beginning of the return stroke in the direction 146, pressurized fluid is provided to the fluid supply port 186 to cause the piston rod 172B to extend and cause the second actuator 160B to move in the -X direction of the coordinate axes depicted in FIGS. 2A and 2B. The movement of the second actuator 160B in the -X direction causes the arm 162 to pivot about the pivot axis 168 such that the first end portion 164 rotates in the direction 192 (e.g., clockwise in FIG. 2B). The rotation of the first end portion 164 in the direction 192 correspondingly causes the second end portion 166 to rotate in the direction 194 (e.g., clockwise in FIG. 2B). The rotation of the second end portion 166 in the direction 194 causes the actuator 160A to move at least partly in the +X direction and at least partly in the -Z direction to cause at least a partial lowering of the front powder plow 152A in the -Z direction. At or near the end of the forward stroke and/or at or near the beginning of the return stroke in the direction 146, pressurized fluid is also provided to the fluid supply port 174 to cause the piston rod 172A to extend in the direction 185. Thus, in combination with the rotation of the second end portion 166 in the direction 194 that causes the actuator 160A to move at least partly in the +X direction and at least partly in the -Z direction, the extension of the piston rod 172A in the direction 185 causes additional lowering of the front powder plow 152A in the -Z direction such that the front powder plow 152A is moved to the extended position 158 at or near the end of the forward stroke and/or at or near the beginning of the return stroke (as depicted in FIGS. 2A and 2B). Thus, the pivotal coupling of the front powder plow 152A about the pivot axis 154 and the pivotal coupling between the clevis 182 and the connecting rod 180 about the pivot axis 183 enables the front powder plow 152A to move in the +/-Z direction based on the control of the actuators 160A, 160B.

In the illustrated embodiment, the recoater assembly 118 also includes one or more sensors 200 configured to detect a vertical position of the front powder plow 152A (e.g., in the +/-Z direction of the coordinate axes depicted in FIGS. 2A and 2B). In the illustrated embodiment, a first sensor 200A is coupled to the first actuator 160A, and a second sensor 200B is coupled to the second actuator 160B. The one or more sensors 200 may be communicatively coupled to the controller 124 (FIG. 1). In exemplary embodiments, the one or more sensors 200 are analog sensors. In exemplary embodiments, the one or more sensors 200 are proximity sensors. In exemplary embodiments, the first sensor 200A is configured to detect a position of the piston rod 172A, and the second sensor 200B is configured to detect a position of the piston rod 172B. Based on the detected positions of the respective piston rods 172A, 172B, a determination can be made as to the position of the front powder plow 152A with respect to the working surface 116 (e.g., in the +/-Z direction of the coordinate axes depicted in FIGS. 2A and 2B).

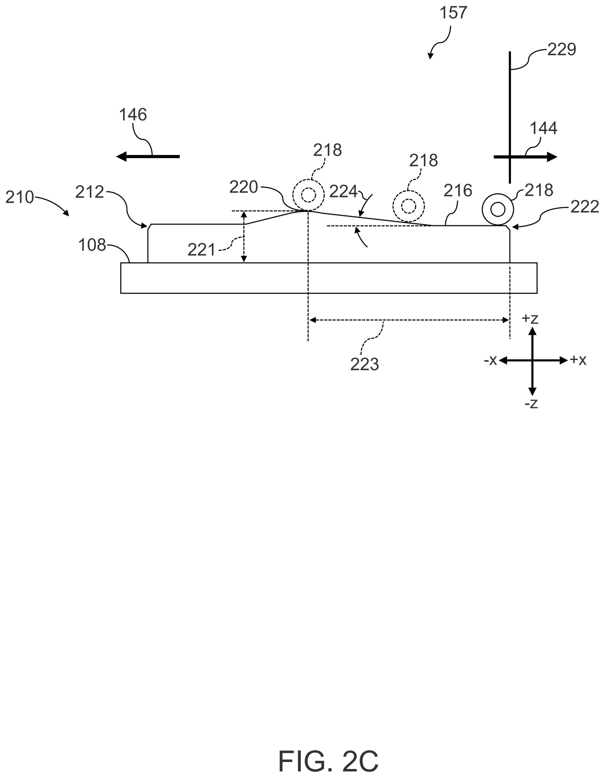

In exemplary embodiments, the recoater assembly 118 includes at least a portion of a powder plow lift mechanism 210 configured to gradually move the front powder plow 152A in the +Z direction from the extended position 158 as the recoater assembly 118 is moved during the return stroke over a defined distance in the direction 146 (e.g., the -X direction). In exemplary embodiments, to avoid a significant or abrupt step in the powder build material 114 (FIG. 1) on the table 108 and/or build platform 106, the powder plow lift mechanism 210 is configured to gradually and smoothly raise or elevate the front powder plow 152A in the +Z direction of the coordinate axes depicted in FIGS. 2A and 2B from the extended position 158 as the recoater assembly 118 moves during the return stroke (e.g., at or near a beginning of the return stroke). In exemplary embodiments, at least a portion of the powder plow lift mechanism 210 resides on or near the table 108 and at least a portion of the powder plow lift mechanism 210 resides on the recoater assembly 118. In the illustrated embodiment, the powder plow lift mechanism 210 includes a ramp element 212 positioned on the table 108 at or near a periphery of the working surface 116 (depicted in FIG. 2A but omitted from FIG. 2B for ease of description and illustration). In exemplary embodiments, the ramp element 212 is positioned outside the working surface 116 but located in close proximity to the recoater assembly 118 when the recoater assembly 118 is at or near the end of the forward stroke and/or at or near the beginning of the return stroke. Referring also to FIG. 2C, a schematic diagram of a side view of the ramp element 212 according to an exemplary embodiment of the present disclosure is illustrated. The ramp element 212 extends longitudinally along at least a portion of the working axis (e.g., an axis extending parallel to the +/-X axis of the coordinate axes depicted in FIG. 2C) and defines a lift surface 216 facing upwardly in the +Z direction of the coordinate axes depicted in FIGS. 2A and 2C. A distance between the lift surface 216 and the table 108 gradually and smoothly increases as the lift surface 216 transitions in the -X direction from at or near a forward portion 222 of the ramp element 212 toward a peak 220. The peak 220 defines a maximum height 221 in the +Z direction of the lift surface 216 with respect to the table 108. The peak 220 may be located a defined distance 223 from the forward portion 222, and the forward portion 222 may be located at a defined location on the table 108 with respect to the end of the forward stroke and/or the beginning of the return stroke such that the peak 220 is located at a defined distance in the -X direction from a forward (or +X) end of the return area 157. In other words, the return area 157 may have a forward boundary 229 located a defined distance in the +X direction from a boundary of the build platform 106 (FIG. 1) such that the peak 220 is located a defined distance in the -X direction from the forward boundary 229 of the return area 157. Thus, in exemplary embodiments, the forward portion 222 may be located in alignment with the forward boundary 229 along the X axis such that the peak 220 is located at the distance 223 in the -X direction from the forward boundary 229. In exemplary embodiments, the lift surface 216 may be configured having a tapered slope 224 of from about one degree (1°) to about five degrees (5°). The lift surface 216 may also be a curved surface transitioning in the +Z direction as the lift surface 216 transitions in the -X direction such that the lift surface 216 defines a smooth, non-stepped surface from the forward portion 222 of the ramp element 212 to the peak 220.

Referring to FIGS. 2A-2C, in exemplary embodiments, the powder plow lift mechanism 210 includes a roller bearing 218 coupled to the front powder plow 152A. The roller bearing 218 and the ramp element 212 are positioned with respect to each other such that, during at least a portion of the return stroke in the direction 146 over a defined distance (e.g., the distance 223), the roller bearing 218 engages or contacts the lift surface 216. As the recoater assembly 118 is moved in the direction 146, the roller bearing 218 follows the lift surface 216 resulting in upward force being applied to the front powder plow 152A in the +Z direction as a distance between the lift surface 216 and the working surface 116 increases. Accordingly, as the recoater assembly 118 continues to move in the direction 146 during at least a portion of the return stroke, the contact between the roller bearing 218 and the lift surface 216 causes the front powder plow 152A to gradually elevate in the +Z direction to a partially retracted position (e.g., a position greater in the +Z direction than the Z-position of the front powder plow 152A in the extended position 158 (FIG. 2B).

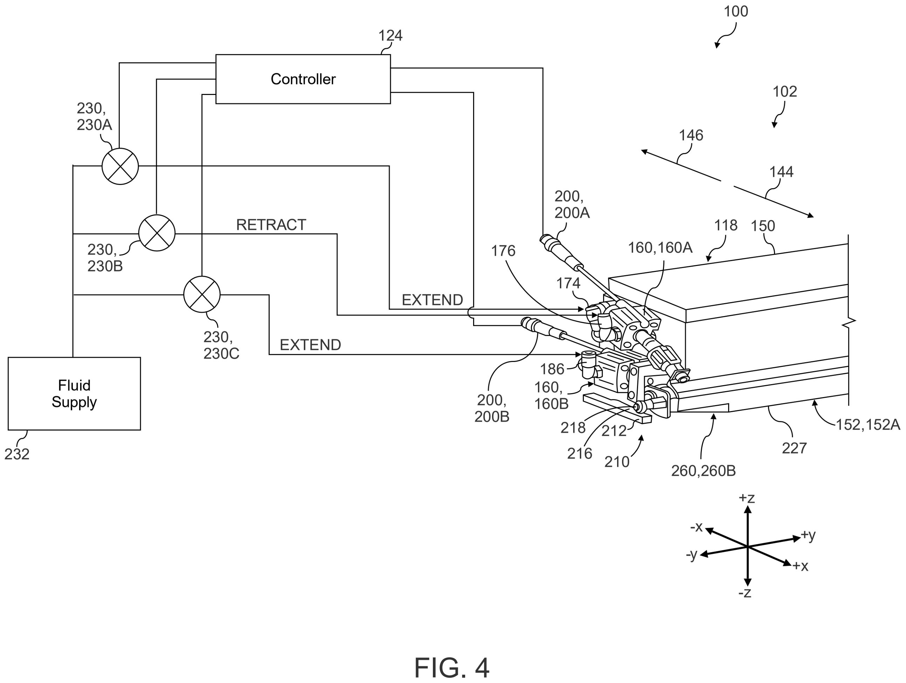

As best depicted in FIG. 2C, the peak 220 is positioned in the +Z direction to define a maximum distance the front powder plow 152A (FIGS. 2A and 2B) is lifted in the +Z direction using the ramp element 212. As illustrated in FIG. 2C, the roller bearing 218 (the remainder of the front powder plow 152A omitted from view in FIG. 2C for ease of description and illustration) engages a forward portion 222 of the ramp element 212 on the lift surface 216. As the recoater assembly 118 (FIGS. 2A and 2B) is moved in the direction 146 during the return stroke, the roller bearing 218 follows the lift surface 216 causing the front powder plow 152A (FIGS. 2A and 2B) to be raised or elevated in the +Z direction (e.g., about the pivot axis 154 (FIG. 2B)). As will be described in further detail in connection with FIG. 4, a control methodology is used to maintain the front powder plow 152A (FIGS. 2A and 2B) in the elevated position reached at the peak 220 for a remainder of at least a portion of the return stroke.

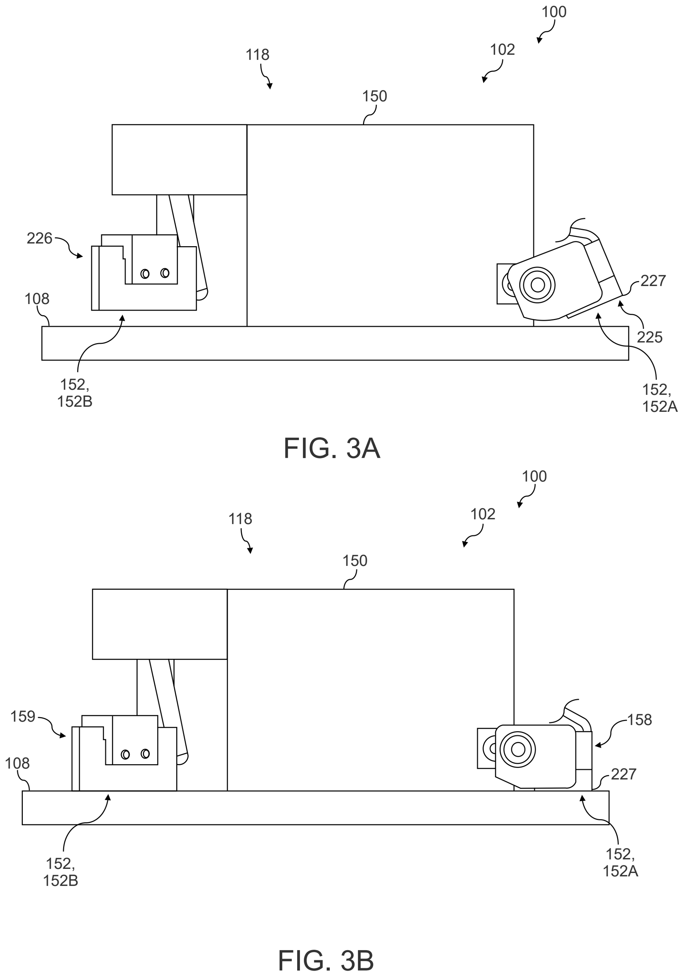

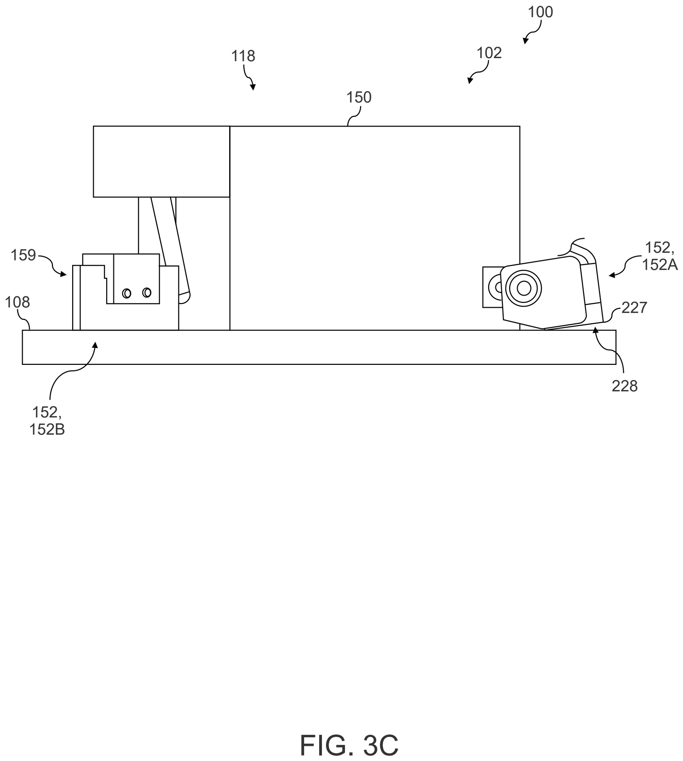

FIGS. 3A-3C depict locations of the front powder plow 152A and the back powder plow 152B at various positions along the working axis of the working surface 116 (FIG. 1) with respect to the forward stroke and/or return stroke of the recoater assembly 118. In FIGS. 3A-3C, various components of the recoater assembly 118 are omitted from view for ease of description and illustration. FIG. 3A depicts the recoater assembly 118 at or near the beginning of the forward stroke and/or at or near the end of the return stroke (e.g., in the home position 128 (FIG. 1), FIG. 3B depicts the recoater assembly 118 at or near the end of the forward stroke and/or at or near the beginning of the return stroke (e.g., in the return area 157 (FIGS. 1 and 2B), and FIG. 3C depicts the recoater assembly 118 after movement of the recoater assembly 118 a defined distance in the -X direction from the end of the forward stroke and/or the beginning of the return stroke (e.g., the distance 223 (FIG. 3C)). Referring to FIG. 3A, at or near the beginning of the forward stroke, the front powder plow 152A is positioned in a retracted position 225, and the back powder plow 152B is positioned in a retracted position 226. In the retracted positions 225, 226, the respective front powder plow 152A and back powder plow 152B are in elevated positions in the +Z direction away from the table 108. In other words, in exemplary embodiments, in the retracted positions 225, 226, the respective front powder plow 152A and back powder plow 152B do not contact the table 108, the build platform 106, or any powder build material 114 (FIG. 1). In exemplary embodiments, in the retracted position 225, a leading edge portion 227 of the front powder plow 152A may be between from about 8 mm to about 9mm in the +Z direction above the table 108. In exemplary embodiments, the front powder plow 152A and back powder plow 152B remain in the respective retracted positions 225, 226 during a substantial portion of the forward stroke. The front powder plow 152A and back powder plow 152B may be raised to the respective retracted positions 225, 226 at or near the beginning of the forward stroke and/or at or near the end of the return stroke.

Referring to FIG. 3B, at or near the end of the forward stroke and/or at or near the beginning of the return stroke (e.g., in the return area 157 (FIG. 1)), the front powder plow 152A and back powder plow 152B are lowered in the -Z direction to the respective extended positions 158, 159 (see also FIG. 2B). Referring to FIG. 3C, the front powder plow 152A is depicted in a partially retracted position 228. In FIG. 3C, the recoater assembly is depicted as having moved at least partially in the return stroke a defined distance such that the powder plow lift mechanism 210 (FIG. 2C) has caused the front powder plow 152A to elevate in the +Z direction away from the table 108 from the extended position 158 (FIGS. 2B and 3B) to the partially retracted position 228. In other words, referring also to FIG. 2C, engagement of the roller bearing 218 with the lift surface 216 of the ramp element 212 during the return stroke causes the front powder plow 152A to elevate in the +Z direction away from the table 108 from the extended position 158 (FIGS. 2B and 3B) to the partially retracted position 228. In exemplary embodiments, the partially retracted position 228 of the front powder plow 152A is such that the leading edge portion 227 of the front powder plow 152A is from about 2.5 mm to about 3.0 mm in the +Z direction above the table 108. Thus, in exemplary embodiments, the partially retracted position 228 of the front powder plow 152A positions the leading edge portion 227 of the front powder plow 152A in a Z-axis position greater than the extended position 158 (FIGS. 2B and 3B) and less than the retracted position 225 (FIG. 3A). In exemplary embodiments, the front powder plow 152A remains in the partially retracted position 228 for substantially a remainder of the return stroke (e.g., until being raised to the retracted position 225 (FIG. 3A) at or near the end of the return stroke and/or at or near the beginning of the forward stroke). In exemplary embodiments, the front powder plow 152A remains in the partially retracted position 228 while the front powder plow 152A traverses over at least a portion of the build platform 106 during the return stroke. In exemplary embodiments, the back powder plow 152B remains in the extended position 159 (FIGS. 2B, 3B, and 3C) for substantially the entirety of the return stroke until being raised to the retracted position 226 (FIG. 3A) at or near the end of the return stroke and/or at or near the beginning of the forward stroke. Thus, in exemplary embodiments, as the front powder plow 152A is gradually elevated from the extended position 158 (FIGS. 2B and 3B) to the partially retracted position 228 (FIG. 3A), the front powder plow 152A would grade or taper any powder build material 114 (FIG. 1) on the working surface 116 over the distance 223 (FIG. 2C). The distance 223 (FIG. 2C) may be wholly located over the table 108 (FIG. 1), may extend at least partially over the table 108 (FIG. 1) and at least partially over the build platform 106 (FIG. 1), or extend wholly over the build platform 106 (FIG. 1) depending at least in part on a size of the working surface 116 utilized.

FIG. 4 is a schematic diagram depicting the additive manufacturing system 100 of FIGS. 1-2C in accordance with an exemplary embodiment of the present disclosure. In the illustrated embodiment, the additive manufacturing system 100 includes one or more flow control devices 230 to control the delivery of a pressurized fluid from a fluid supply 232 to the first and second actuators 160A, 160B. In the illustrated embodiment, the flow control device 230A is fluidly coupled between the fluid supply 232 and the fluid supply port 174, the flow control device 230B is fluidly coupled between the fluid supply 232 and the fluid supply port 176, and the flow control device 230C is fluidly coupled between the fluid supply 232 and the fluid supply port 186. The controller 124 is communicatively coupled to the flow control devices 230A, 230B, 230C to control the operation or actuation of the flow control devices 230A, 230B, 230C. In exemplary embodiments, the flow control devices 230A, 230B, 230C are solenoid valves controllable by the controller 124 to provide pressurized air to the pneumatic cylinders 170A, 170B (FIG. 2B).

Referring to FIGS. 2B and 4, in operation, an enabled or "on" state of the flow control devices 230 cause corresponding piston rods 172A, 172B to extend or retract. In other words, an enabled or "on" state of the flow control device 230A causes the piston rod 172A to extend, an enabled or "on" state of the flow control device 230B causes the piston rod 172A to retract, and an enabled or "on" state of the flow control device 230C causes the piston rod 172B to extend. During the forward stroke of the recoater assembly 118, the flow control device 230A is "off," the flow control device 230B is "on," and the flow control device 230C is "off" causing the piston rods 172A and 172B to be in a retracted position. With the piston rods 172A and 172B in a retracted position, the front powder plow 152A is located in the retracted position 225 (FIG. 3A). In exemplary embodiments, as the recoater assembly 118 nears or reaches the end of the forward stroke, flow control device 230C is enabled or turned "on" to cause the piston rod 172B to extend. Thus, at or near the end of the forward stroke, the extended position of the piston rod 172B causes rotation of the arm 162 in the direction 192 and causes partial movement of the actuator 160A in the direction 194 which causes a partial lowering the front powder plow 152A in the -Z direction.

In exemplary embodiments, at or near the end of the forward stroke, the flow control device 230A is enabled or turned "on" causing the piston rod 172A to extend (e.g., in the direction 185) which lowers the front powder plow 152A an additional amount in the -Z direction such that the front powder plow 152A is placed in the extended position 158 (FIGS. 2B and 3B).

At or near the beginning of the return stroke, flow control devices 230A and 230B are disabled or turned "off" which causes the actuator 160A to be placed in a neutral state with the piston rod 172A remaining in an extended position. As the recoater assembly 118 moves in the direction 146 corresponding to the return stroke, the roller bearing 218 engages the lift surface 216 of the ramp element 212 (FIG. 2C) and follows the lift surface 216 which causes a gradual lifting the front powder plow 152A in the +Z direction during at least a beginning portion of the return stroke toward the partially retracted position 228 (FIG. 3C), which also causes the piston rod 172A to partially retract (e.g., in a direction opposite the direction 185). In exemplary embodiments, the first sensor 200A is used by the controller 124 to detect and monitor the position of the piston rod 172A which provides an indication of the elevated position of the front powder plow 152A in the +Z direction with respect to the table 108 as the roller bearing 218 follows the lift surface 216.

Continued movement of recoater assembly 118 during the return stroke in the direction 146 causes the roller bearing 218 to reach the peak 220 (FIG. 2C) causing the front powder plow 152A to reach the partially retracted position 228 (FIG. 3C). The controller 124 (e.g., via the first sensor 200A) detects the elevated position of the front powder plow 152A in the +Z direction (e.g., via the position of the piston rod 172A) and verifies that the front powder plow 152A is within a defined distance or distance range above the table 108 in the +Z direction. In response to detecting that the front powder plow 152A is within the defined distance or distance range above the table 108 in the +Z direction, the flow control device 230B is enabled or turned "on" by the controller 124 to maintain the front powder plow 152A within the defined distance or distance range above the table 108 in the +Z direction (e.g., in the partially retracted position 228 (FIG. 3C)) for substantially a remainder of the return stroke. In exemplary embodiments, the peak 220 (FIG. 2C) of the ramp element 212 is defined such that the front powder plow 152A is elevated to be within the defined distance or distance range above the table 108 in the +Z direction to limit a vertical height of the powder build material 114 (FIG. 1) in the +Z direction in the working surface 116 (FIG. 1) to prevent or substantially prevent the print head 122 (FIG. 1) from contacting the powder build material 114 (FIG. 1). Thus, in exemplary embodiments, the peak 220 (FIG. 2C) may be configured such that when the roller bearing 218 reaches the peak 220 (FIG. 2C) of the lift surface 216, the front powder plow 152A is located in the partially retracted position 228 (FIG. 3C).

At substantially at the end of the return stroke, the flow control device 230C is disabled or turned "off" to cause the piston rod 172B to retract which causes a further raising or elevating of the front powder plow 152A in the +Z direction with respect to the working surface 116 to the retracted position 225 (FIG. 3A) (e.g., in preparation for repeating the above method for performing another forward stroke).

As described above, in exemplary embodiments, the actuator 160B is a spring return actuator such that, in the event of a loss of a pressurized fluid supply to the actuator 160B, the piston rod 172B retracts which causes at least a partial lifting of the front powder plow 152A away from the table 108 in the +Z direction. In other words, configuring the actuator 160B is a spring return actuator provides a failsafe mechanism so that, in the event of a loss of a pressurized fluid supply to the actuator 160B during the return stroke, the front powder plow 152A does not remain in the extended position 158 (FIGS. 2B and 3B) during a substantial portion of the return stroke which might otherwise cause a significant or excessive amount of the powder build material 114 (FIG. 1) to be plowed across the working surface 116 by the front powder plow 152A during the return stroke. The second sensor 200B may also be used by the controller 124 to verify a position of the front powder plow 152A with respect to the table 108 via a detected position of the piston rod 172B.

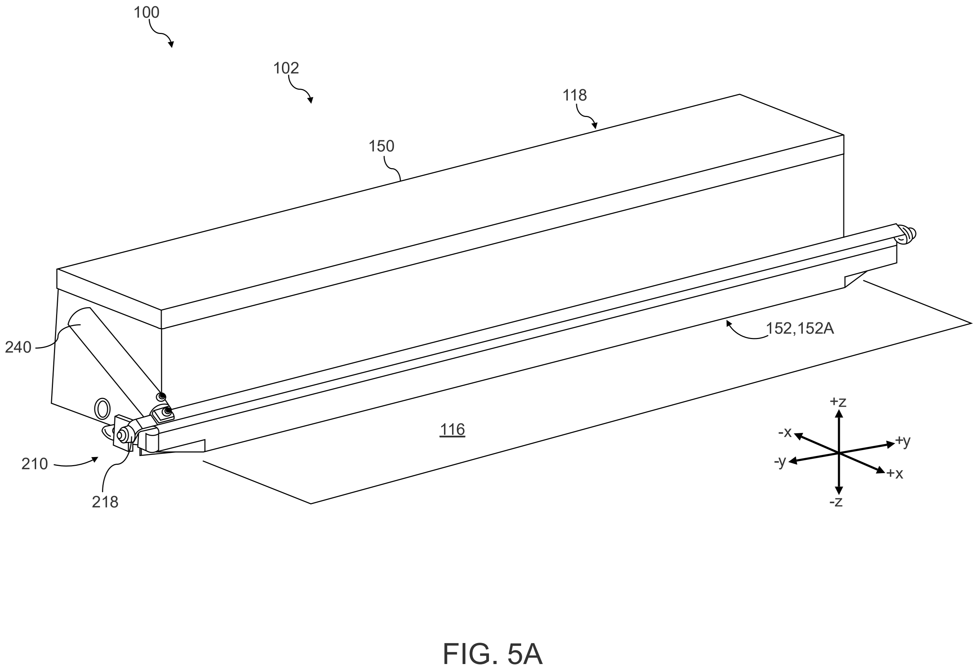

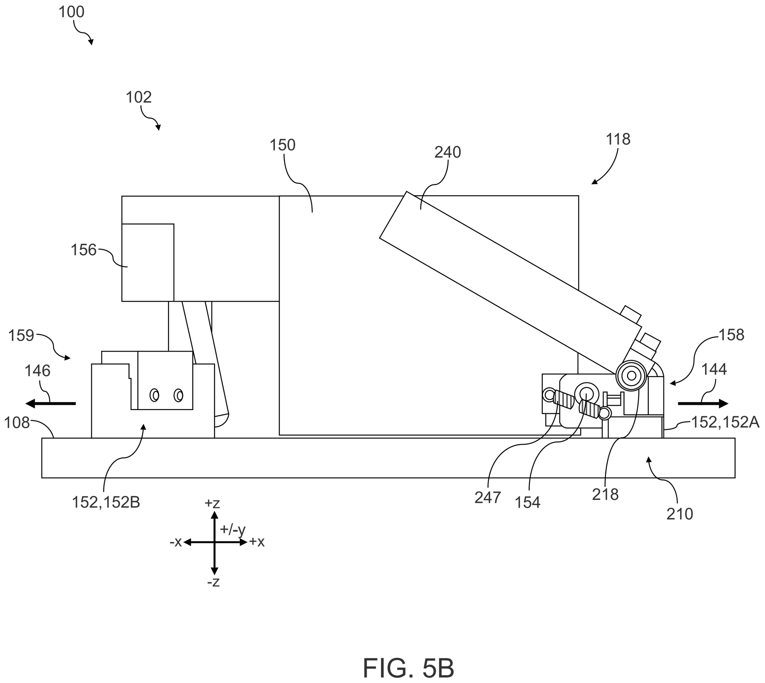

Referring to FIGS. 5A-5E, another exemplary embodiment of the recoater assembly 118 according to the present disclosure is illustrated. The recoater assembly 118 may be at least partially configured similar to the recoater assembly 118 depicted and described in connection with FIGS. 2A-4, like or similar designations in the drawings and description used to refer to like or similar parts of the disclosure. FIG. 5A is a schematic diagram depicting an isometric view of the recoater assembly 118, and FIGS. 5B-5E are schematic diagrams depicting side views of the recoater assembly 118 according to the present disclosure.

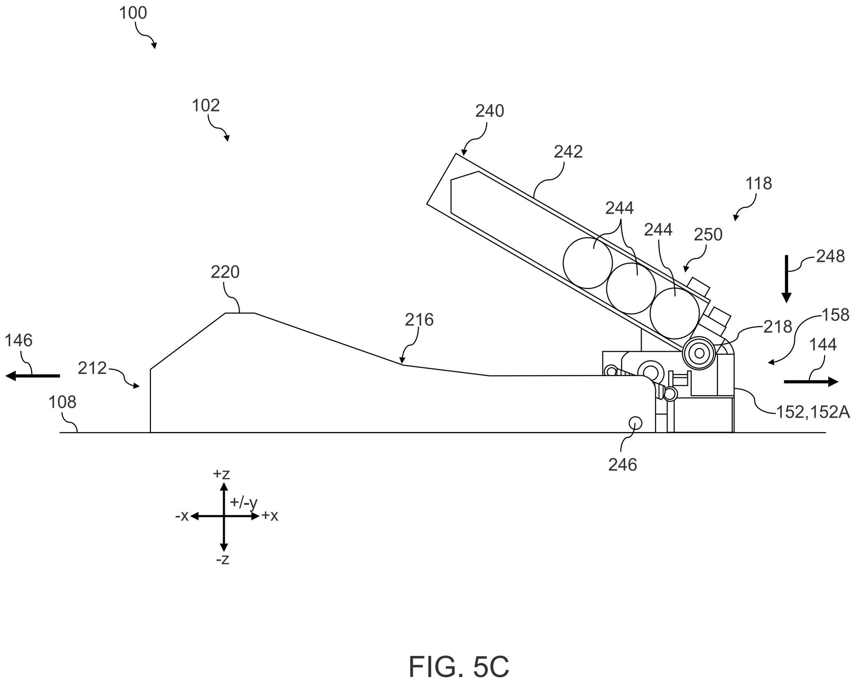

In the illustrated embodiment, the powder plow lift mechanism 210 includes a counterweight 240 coupled to the front powder plow 152A. In exemplary embodiments, the counterweight 240 may include a counterweight housing 242 containing one or more counterweight mass elements 244 that are movable within the counterweight housing 242. In the illustrated embodiment, the ramp element 212 includes a trip element 246 that extends at least partially inward toward the working surface 116 from the ramp element 212. It should be understood that the trip element 246 may also be a separate component apart from the ramp element 212. The trip element 246 is positioned to cause the front powder plow 152A to move from the retracted position 225 (e.g., as depicted in FIG. 3A) to the extended position 158 in response to contact of the front powder plow 152A with the trip element 246 as the front powder plow 152A is moved in the direction 144 during the forward stroke. In other words, the trip element 246 is positioned at or near an end of the forward stroke of the recoater assembly 118 such that when the front powder plow 152A reaches and contacts the trip element 246, the trip element 246 causes the front powder plow 152A to pivot downwardly toward the table 108 (e.g., in a clockwise direction in FIGS. 5B and 5C). The trip element 246 may be a dowel, rod, elevated surface, or other type of structure positioned to engage a portion of the front powder plow 152A to cause the front powder plow 152A to move from the retracted position 225 (e.g., as depicted in FIG. 3A) to the extended position 158 at or near the end of the forward stroke.

FIGS. 5B and 5C depict the front powder plow 152A in the extended position 158. In other words, in FIGS. 5B and 5C, the front powder plow 152A is depicted in a position to begin the return stroke in the direction 146. The ramp element 212 is omitted from FIG. 5B for ease of description and illustration. In exemplary embodiments, during the forward stroke in the direction 144, the front powder plow 152A contacts the trip element 246 which causes the front powder plow 152A to move downward from the retracted position 225 (e.g., as depicted in FIG. 3A) to the extended position 158. In other words, contact of the front powder plow 152A with the trip element 246 during the forward stroke moves the front powder plow 152A in the direction 248. In exemplary embodiment, a spring element 247 may be coupled between the base member 150 and the front powder plow 152A to bias the front powder plow 152A in the extended position 158 with respect to the table 108. Additionally, in response to the front powder plow 152A moving from the retracted position 225 (e.g., as depicted in FIG. 3A) to the extended position 158, the one or more counterweight mass elements 244 shift or move within the counterweight housing 242 toward a forward end 250 of the counterweight housing 242 to maintain the front powder plow 152A in the extended position 158.

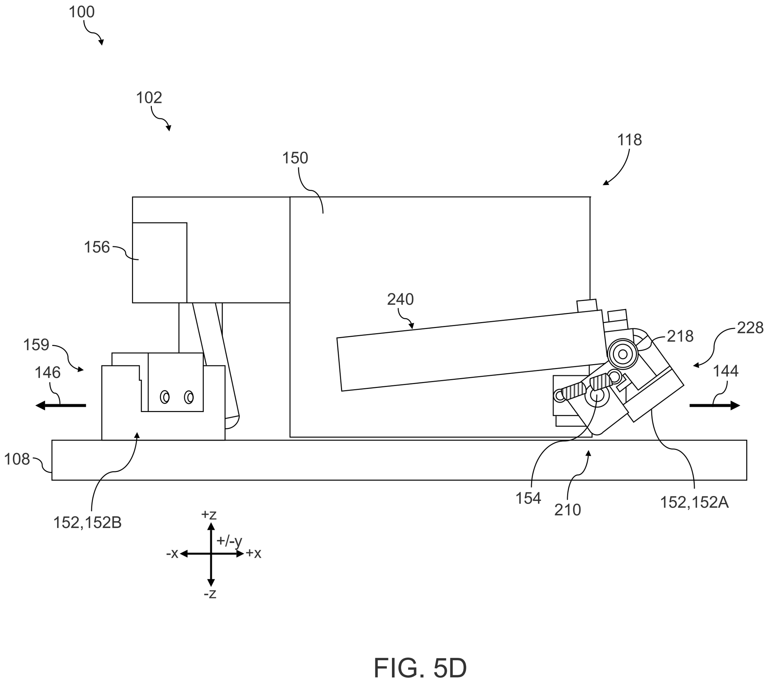

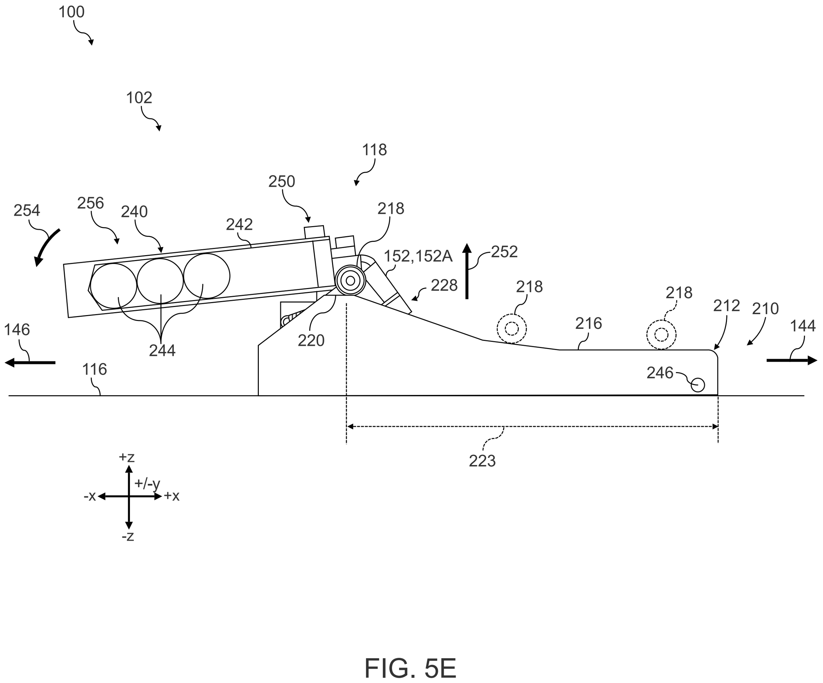

FIGS. 5D and 5E depict the gradual lifting of the front powder plow 152A from the extended position 158 to the partially retracted position 228 (e.g., in the +Z direction) to avoid an abrupt step in the powder build material 114 (FIG. 1) as the recoater assembly 118 begins the return stroke in the direction 146. The ramp element 212 is omitted from FIG. 5D for ease of description and illustration. In operation, as the recoater assembly 118 is moved in the direction 146 of the return stroke, the roller bearing 218 engages the lift surface 216 of the ramp element 212 such that continued movement of the recoater assembly 118 in the direction 146 causes the roller bearing 218 to follow the contour of the lift surface 216 and gradually elevate the front powder plow 152A in the +Z direction over the defined distance 223, as depicted by the direction 252. As the recoater assembly 118 continues the return stroke in the direction 146, the roller bearing 218 reaches the peak 220 of the lift surface 216 causing the counterweight 240 to rotate counterclockwise in the direction 254 which causes similar counterclockwise rotation of the front powder plow 152A about the pivot axis 154. The counterclockwise rotation of the counterweight 240 in the direction 254 causes the counterweight mass elements 244 to shift or move within the counterweight housing 242 from the forward end 250 of the counterweight housing 242 to a back end 256 of the counterweight housing 242. The position of the counterweight mass elements 244 at or near the back end 256 of the counterweight housing 242 maintains the front powder plow 152A in the partially retracted position 228 (e.g., the position of front powder plow 152A when the roller bearing 218 has reached the peak 220 of the lift surface 216) for at least a substantial portion of the remainder of the return stroke.

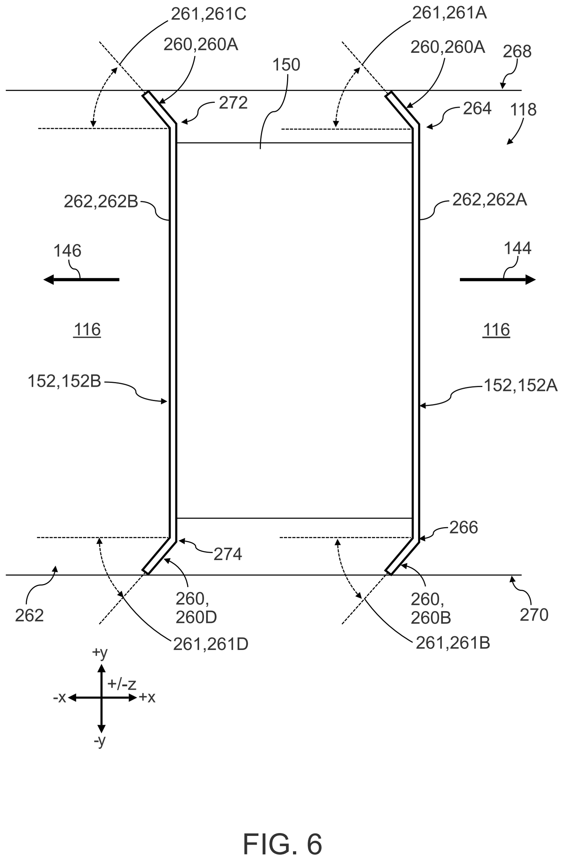

FIG. 6 is a schematic diagram depicting a top view of a portion of the recoater assembly 118 in accordance with an embodiment of the present disclosure. In the illustrated embodiment, one or more of the powder plows 152 include one or more wing elements 260 positioned proximate to a periphery 262 of the working surface 116. In the illustrated embodiment, the front powder plow 152A includes wing elements 260A and 260B, and the back powder plow 152B includes wing elements 260C and 260D. In exemplary embodiments, the front and back powder plows 152A, 152B each include a respective plow element 262A, 262B extending across at least a portion of the working surface 116 substantially perpendicular to the forward and return stroke directions (e.g., substantially perpendicular to the directions 144, 146, respectively). In the illustrated embodiment, the plow element 262A includes a first end 264 positioned proximate a first side 268 of the working surface 116 and a second end 266 distal or opposite to the first end 264 and positioned proximate a second side 270 of the working surface 116 opposite the first side 268. The wing element 260A is positioned at the first end 264 of the plow element 262A, and the wing element 260B is positioned at the second end 266 of the plow element 262A. Similarly, the plow element 262B includes a first end 272 positioned proximate the first side 268 of the working surface 116 and a second end 274 distal or opposite to the first end 272 and positioned proximate the second side 270 of the working surface 116 opposite the first side 268. The wing element 260C is positioned at the first end 272 of the plow element 262B, and the wing element 260D is positioned at the second end 274 of the plow element 262B.

In the illustrated embodiment, the wing elements 260A-260D are disposed at acute angle 261A-261D, respectively, with respect to the direction 146 such that when the recoater assembly 118 is moved in the direction 146 during the return stroke, the wing elements 260A-260D direct the powder build material 114 (FIG. 1) toward an inward portion of the working surface 116 during the return stroke (e.g., toward a center or inner portion of the working surface 116 between the first side 268 and the second side 270). In other words, the wing elements 260A-260D extend outwardly from at least one of the first ends 264, 272 or the second ends 266, 274 at an obtuse angle with respect to the respective plow element 262A, 262B. The angles 261A-261D may be the same or may vary between the respective wing elements 260A-260D. The wing elements 260A and 260B are also depicted in FIG. 2A. The wing elements 260A-260D may be formed integrally with the respective plow elements 262A, 262B or may be configured to be removably attached to the respective plow elements 262A, 262B to enable replacement of the wing elements 260A-260D due to wear. In exemplary embodiments, the wing elements 260A-260D extend outwardly from the respective plow elements 262A, 262B (e.g., partially in the X-axis and Y-axis directions) and terminate at or near the respective first side 268 or the second side 270. However, it should be understood that the wing elements 260A-260D may be configured to terminate at different locations with respect to the first side 268 and/or the second side 270.

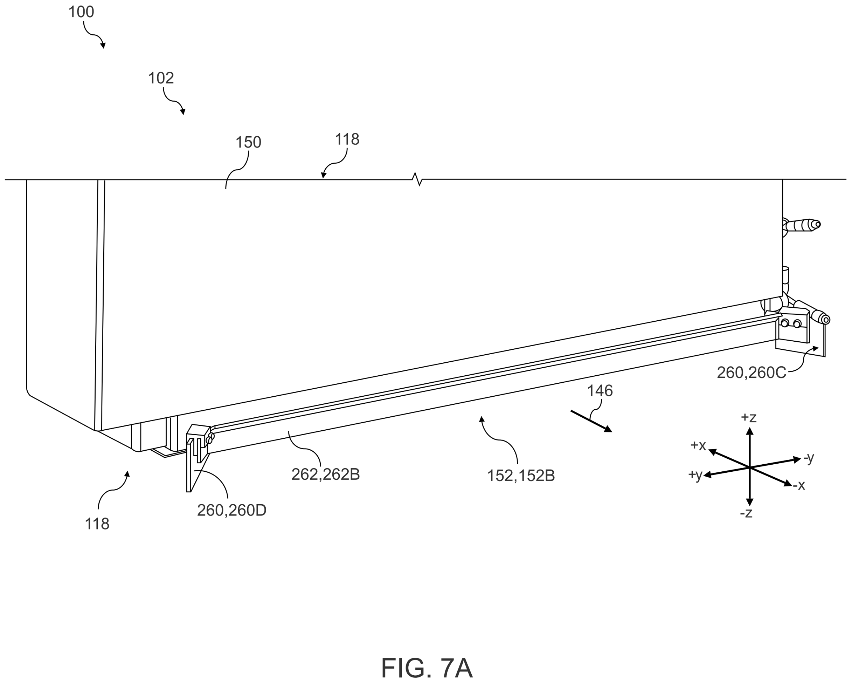

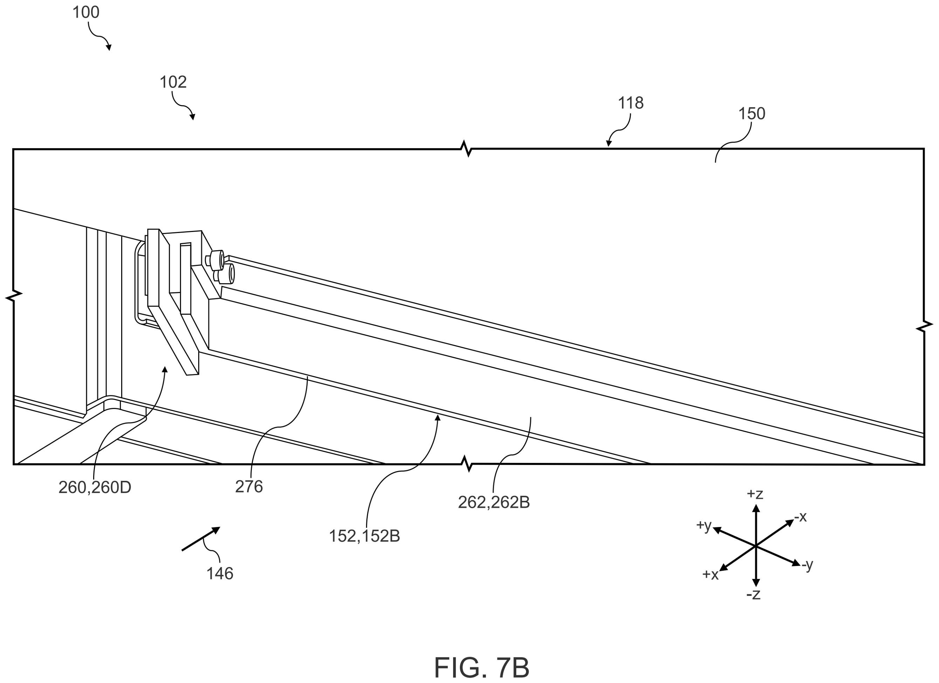

Referring to FIGS. 7A and 7B, FIG. 7A is a schematic diagram depicting an isometric view of a back portion of the recoater assembly 118 viewed from a downward perspective, and FIG. 7B is a schematic diagram depicting an isometric view of a back portion of the recoater assembly 118 viewed from an upward perspective. In the illustrated embodiment, the powder plow 152B is configured to be movable in the +/-Z direction with respect to the working surface 116 (FIG. 1) (e.g., via the actuator 156 (FIG. 2B)). In the illustrated embodiment, the plow element 262B includes a first side 276 positioned to face the working surface 116 (FIG. 1). In exemplary embodiments, at least a portion of the wing elements 260C, 260D extends downwardly in the -Z direction beyond the first side 276 such that when the back powder plow 152B is in the extended position 159 (FIG. 2B), one or more of the wing elements 260C, 260D are in contact with at least a portion of the working surface 116 (FIG. 1) during the return stroke in the direction 146. Thus, in operation, during the forward stroke of the recoater assembly 118, the back powder plow 152B is in the retracted position 226 (FIG. 3A) with respect to the working surface 116 (FIG. 1) such that the first side 276 and the wing elements 260C, 260D are spaced apart from the working surface 116 (FIG. 3A). At or near the return area 157 (FIG. 2B), the back powder plow 152B is lowered in the -Z direction such that at least a portion of one or more of the wing elements 260C, 260D are positioned in contact with at least a portion of the working surface 116 (FIG. 1) (e.g., in contact with at least a portion of the table 108 and/or the build platform 106 (FIG. 1)) while the first side 276 of the plow element 262B remains in a spaced apart position to the working surface 116 (FIG. 1) in the Z-axis direction. Thus, in exemplary embodiments, the wing elements 260C, 260D move along the periphery of the working surface 116 (FIG. 6) to substantially prevent the powder build material 114 (FIG. 1) from migrating beyond a predefined boundary of the working surface 116 (FIG. 6). In exemplary embodiments, one or more of the wing elements 260A-260D may include a polytetrafluoroethylene (PTFE) or other type of material providing durability and flexibility of the wing elements 2670A-260D. In other words, one or more of the wing elements 2670A-260D may include or be formed of a low-friction and high wear-resistant material.

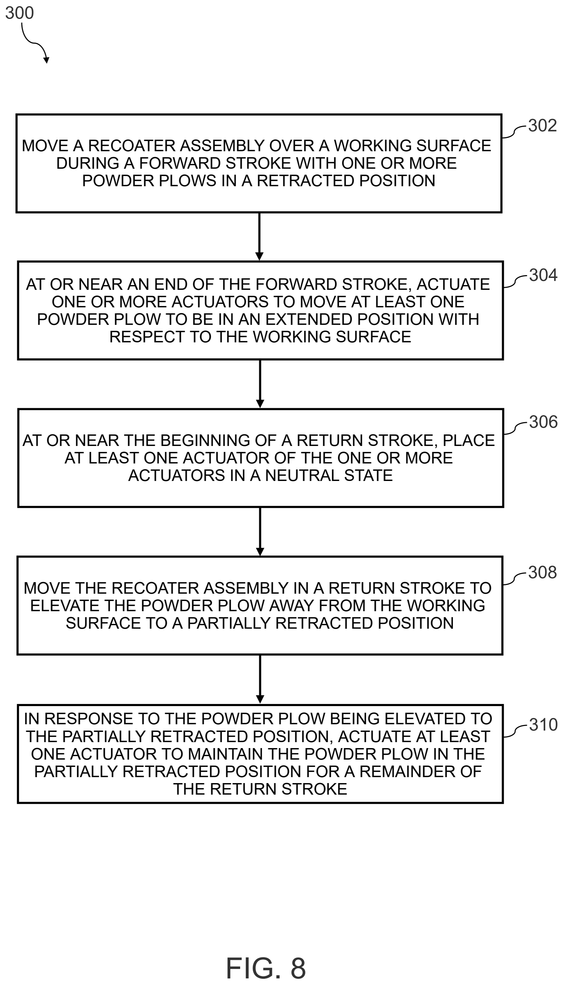

Referring now to FIG. 8, a flow diagram is presented depicting an exemplary embodiment of a method 300 for performing a recoating process for additively manufacturing three-dimensional objects in accordance with various aspects of the present disclosure. The initial step 302 of the method 300 involves moving the recoater assembly 118 over a working surface 116 during a forward stroke with the one or more powder plows 152 in a retracted position (e.g., the front powder plow 152A in the retracted position 225 and the back powder plow 152B in the retracted position 226 (FIG. 3A)).

The method 300 proceeds to step 304, where at or near an end of the forward stroke, one or more actuators 160 are actuated to move at least a portion of at least one powder plow 152 of the one or more powder plows 152 to be in extended positions with respect to the working surface 116 (e.g., the powder plow 152A in the extended position 158 and/or the back powder plow 152B in the extended position 159 (FIGS. 2B and 3B)). Continuing to step 306, at or near the beginning of a return stroke, at least one actuator 160 of the one or more actuators 160 is placed in a neutral state. At step 308, the recoater assembly 118 is moved in a return stroke to elevate the powder plow 152A away from the working surface 116 to the partially retracted position 228 (FIG. 3C) (e.g., utilizing the powder plow lift mechanism 210 (FIG. 2C)).

The method 300 then advances to step 310, where, in response to the powder plow 152 being elevated to the partially retracted position 228 (FIG. 3C), at least one actuator 160 of the one or more actuators 160 is actuated to maintain the powder plow 152 in the partially retracted position 228 (FIG. 3C) for a remainder of the return stroke.

FIG. 9 provides an example computing system 400 according to example embodiments of the present disclosure. The computing devices or elements described herein, such as the controller 124, may include various components and perform various functions of the computing system 400 described below, for example.

As shown in FIG. 9, the computing system 400 can include one or more computing device(s) 402. The computing device(s) 402 can include one or more processor(s) 402A and one or more memory device(s) 402B. The one or more processor(s) 402A can include any suitable processing device, such as a microprocessor, microcontroller, integrated circuit, logic device, and/or other suitable processing device. The one or more memory device(s) 402B can include one or more computer-executable or computer-readable media, including, but not limited to, non-transitory computer-readable media, RAM, ROM, hard drives, flash drives, and/or other memory devices.

The one or more memory device(s) 402B can store information accessible by the one or more processor(s) 402A, including computer-readable instructions 402C that can be executed by the one or more processor(s) 402A. The instructions 402C can be any set of instructions that when executed by the one or more processor(s) 402A, cause the one or more processor(s) 402A to perform operations. In some embodiments, the instructions 402C can be executed by the one or more processor(s) 402A to cause the one or more processor(s) 402A to perform operations, such as any of the operations and functions for which the computing system 400 and/or the computing device(s) 402 are configured, such as controlling movement of the recoater assembly 118 for the forward and return strokes, controlling the one or more flow devices 230 for actuating the one or more actuators 160, and detecting positional information corresponding to one or more sensors 200. The instructions 402C can be software written in any suitable programming language or can be implemented in hardware. Additionally, and/or alternatively, the instructions 402C can be executed in logically and/or virtually separate threads on processor(s) 402A. The memory device(s) 402B can further store data 402D that can be accessed by the processor(s) 402A. For example, the data 402D can include models, lookup tables, databases, etc.

The computing device(s) 402 can also include a network interface 402E used to communicate, for example, with the other components of the computing system 400 (e.g., via a communication network). The network interface 402E can include any suitable components for interfacing with one or more network(s), including for example, transmitters, receivers, ports, controllers, antennas, and/or other suitable components. One or more devices can be configured to receive one or more commands from the computing device(s) 402 or provide one or more commands to the computing device(s) 402.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Thus, embodiments of the present disclosure provide a recoater device or assembly for recoating a powder build material over a build surface for an additive manufacturing system. Embodiments of the present disclosure provide a recoater assembly using a 2-stage motion sequence that substantially prevents an abrupt step in the powder build material by lowering a powder plow to an extended posion at or near the end of the forward stroke and, within a predefined distance from a beginning of the return stroke, gradually lifting the powder plow away from the working surface such that any powder build material at or near the end of the forward stroke is acted on by the powder plow to a smooth, tapered transition with respect to the working surface. After gradually lifting the powder plow near the beginning of a return stroke, the powder plow is maintained in a defined elevated position for substantially the remainder of the return stroke to limit a maximum height of the powder build material with respect to the working surface. In binder jet additive manufacturing applications, the height control of the powder plow prevents the powder build material from coming into contact with the printhead and substantially prevents powder build material from building up and migrating to areas of the additive manufacturing machine that will cause damage or failure of various components of the additive manufacturing machine.

Further aspects of the presently disclosed subject matter are provided by the following clauses:
A recoater assembly for an additive manufacturing system, the recoater assembly comprising: a base member movable across a working surface in a forward stroke in a first direction and in a return stroke in a second direction opposite the first direction, the working surface including a build platform on which a three-dimensional object is formed from a powder build material; a powder plow coupled to the base member and configured to move at least a portion of the powder build material with respect to the working surface during the return stroke; one or more actuators coupled to the powder plow, the one or more actuators actuable to provide vertical movement of the powder plow with respect to the working surface; and a controller operable to control at least one actuator of the one or more actuators to: maintain the powder plow in a retracted position while traversing the working surface during at least a portion of the forward stroke; lower the powder plow to an extended position when the powder plow is at or near a return area with respect to the working surface; enable the powder plow to be lifted from the extended position to a partially retracted position a predefined vertical distance from the working surface; and maintain the powder plow in the partially retracted position while traversing a portion of the working surface corresponding to the build platform during the return stroke.

The recoater assembly of the previous clause, wherein the powder plow comprises at least one wing element positioned proximate to a periphery of the working surface, the at least one wing element positioned at an acute angle with respect to the second direction.

The recoater assembly of any previous clause, wherein the powder plow comprises a first powder plow, and further comprising a second powder plow spaced apart from the first powder plow.

The recoater assembly of any previous clause, wherein the second powder plow comprises at least one wing element positioned to be in contact with at least a portion of the working surface when the base member is moved in the second direction.

The recoater assembly of any previous clause, further comprising: an arm having a first end portion and a second end portion opposite the first end portion, and wherein the arm is pivotably coupled to the base member at a location of the arm between the first and second end portions; wherein the one or more actuators comprise: a first actuator coupled between the base member and the first end portion; and a second actuator coupled between the second end portion and the powder plow.

The recoater assembly of any previous clause, wherein the controller is operable to control the first and second actuators to place the powder plow in the extended position.

The recoater assembly of any previous clause, wherein the controller is operable to place the second actuator in a neutral state to enable the powder plow to be elevated to the partially retracted position in response to a force applied to the powder plow.

The recoater assembly of any previous clause, further comprising a roller bearing coupled to the powder plow, and wherein the roller bearing is configured to follow a ramp element to apply the force to the powder plow.

The recoater assembly of any previous clause, wherein the ramp element comprises a contoured lift surface.

The recoater assembly of any previous clause, wherein the one or more actuators comprise at least one pneumatic cylinder.

The recoater assembly of any previous clause, further comprising at least one flow control device fluidly coupled to the at least one pneumatic cylinder.

The recoater assembly of any previous clause, wherein the controller is operable to control the at least one flow control device to control an actuation of the at least one pneumatic cylinder.

The recoater assembly of any previous clause, further comprising one or more sensors configured to detect a vertical position of the powder plow with respect to the working surface.

The recoater assembly of any previous clause, wherein the powder plow is pivotably coupled to the base member.

The recoater assembly of any previous clause, wherein in the extended position, the powder plow is in contact with at least a portion of the working surface.

The recoater assembly of any previous clause, wherein the controller is operable to place the second actuator in a neutral state to enable the powder plow to be elevated away from the working surface in response to a force applied to the powder plow.

The recoater assembly of any previous clause, further comprising a roller bearing coupled to the powder plow, and wherein the roller bearing is configured to follow a ramp element to apply the force to the powder plow.

The recoater assembly of any previous clause, further comprising at least one flow control device fluidly coupled to the at least one pneumatic cylinder.

The recoater assembly of any previous clause, wherein the controller is operable to control the at least one flow control device to control an actuation of the at least one pneumatic cylinder.

A method for operating a recoater assembly of an additive manufacturing system, the method comprising: moving the recoater assembly across a working surface during a forward stroke in a first direction to provide a powder build material over the working surface, the working surface including a build platform on which a three-dimensional object is formed from a powder build material, the recoater assembly comprising a powder plow located in a retracted position with respect to the working surface during at least a portion of the forward stroke; actuating one or more actuators to lower the powder plow to an extended position when the powder plow is at or near a return area with respect to the working surface; lifting the powder plow from the extended position to a partially retracted position a predefined vertical distance from the working surface; and controlling the one or more actuators to maintain the powder plow in the partially retracted position while traversing a portion of the working surface corresponding to the build platform during a return stroke, wherein the return stroke is in a second direction opposite the first direction.

The method of any previous clause, further comprising: detecting, via at least one sensor during the return stroke, a vertical position of the powder plow with respect to the working surface.

The method of any previous clause, wherein at least one actuator of the one or more actuators comprises a pneumatic cylinder, and wherein detecting comprises detecting a position of a piston rod of the pneumatic cylinder.

The method of any previous clause, wherein the powder plow comprises a first powder plow, and wherein the extended position comprises a first extended position, and further comprising lowing a second powder plow to a second extended position in the return area, the second powder plow spaced apart from the first powder plow.

The method of any previous clause, further comprising placing at least one actuator of the one or more actuators in a neutral state to enable movement of the powder plow in a direction away from the working surface

The method of any previous clause, wherein actuating the one or more actuators to lower the powder plow to the extended position comprises lowering the powder plow to be in contact with at least a portion of the working surface.

The method of any previous clause, further comprising: responsive to detecting the vertical position of the powder plow is at the partially retracted position, actuating at least one actuator to maintain the powder plow at the partially retracted position.

The method of any previous clause, wherein at least one actuator of the one or more actuators comprises a pneumatic cylinder, and wherein detecting comprises detecting a position of a piston rod of the pneumatic cylinder.

The method of any previous clause, wherein lifting the powder plow from the extended position to the partially retracted position comprises moving the powder plow into contact with a ramp element.

A recoater assembly for an additive manufacturing system, the recoater assembly comprising: a base member movable in a first direction across a working surface, the working surface positioned to support a powder build material; and one or more powder plows coupled to the base member, the one or more powder plows configured to move the powder build material across the working surface as the base member is moved in the first direction, at least one powder plow of the one or more powder plows comprising one or more wing elements positioned proximate to a periphery of the working surface, the one or more wing elements positioned at an acute angle with respect to the first direction to direct the powder build material toward an inward portion of the working surface as the base member is moved in the first direction.

The recoater assembly of any previous clause, wherein at least one wing element of the one or more wing elements is positioned to be in contact with at least a portion of the working surface when the base member is moved in the first direction.

The recoater assembly of any previous clause, wherein the least one wing element comprises a flexible wing element.

The recoater assembly of any previous clause, wherein the at least one powder plow is movable in at least a vertical direction with respect to the working surface.

The recoater assembly of any previous clause, wherein at least one wing element of the one or more wing elements comprises a polytetrafluoroethylene (PTFE) material.

The recoater assembly of any previous clause, wherein the at least one wing element comprises a low-friction, high wear-resistant material.

The recoater assembly of any previous clause, wherein the at least one powder plow is movable between a retracted position with respect to the working surface and an extended position with respect to the working surface, and wherein the at least one wing element of the one or more wing elements is positioned above the working surface in the retracted position and in contact with at least the portion of the working surface in the extended position.

The recoater assembly of any previous clause, wherein the first direction comprises a return stroke direction, and wherein the base member is configured to move in a forward stroke direction opposite the return stroke direction, and wherein the at least one powder plow is configured to be in the retracted position for at least a portion of the forward stroke direction and in the extended position for at least a portion of the return stroke direction.

The recoater assembly of any previous clause, wherein the least one powder plow includes a plow element extending across at least a portion of the working surface substantially perpendicular to the first direction, and wherein the plow element comprises a first side facing the working surface, and wherein the first side is positioned spaced apart from the working surface in the retracted position and the extended position.

The recoater assembly of any previous clause, wherein the least one powder plow includes a plow element extending across at least a portion of the working surface, the plow element comprising a first end positioned proximate a first side of the working surface and a second end distal to the first end and positioned proximate a second side of the working surface opposite the first side, and wherein at least one of the first end or the second end comprises the at least one wing element of the one or more wing elements.

The recoater assembly of any previous clause, wherein the at least one powder plow includes a plow element extending across at least a portion of the working surface substantially perpendicular to the first direction, the plow element comprising a first end positioned proximate a first side of the working surface and a second end distal to the first end and positioned proximate a second side of the working surface opposite the first side, and wherein the at least one wing element of the one or more wing elements extends outwardly from at least one of the first end or the second end at an obtuse angle with respect to the plow element.

The recoater assembly of any previous clause, wherein the one or more powder plows comprise a first powder plow disposed in a spaced apart position with respect to a second powder plow, and wherein the first and second powder plows each comprise at least one wing element of the one or more wing elements.

The recoater assembly of any previous clause, wherein the at least one powder plow includes a plow element extending across at least a portion of the working surface, and wherein the at least one wing element of the one or more wing elements is removably coupled to the plow element.

A recoater assembly for an additive manufacturing system, the recoater assembly comprising: a base member; a powder plow pivotably coupled to the base member, the powder plow configured to move a powder build material across a working surface; an arm having a first end portion and a second end portion opposite the first end portion, and wherein the arm is pivotably coupled to the base member at a location of the arm between the first and second end portions; a first actuator coupled between the base member and the first end portion; and a second actuator coupled between the second end portion and the powder plow; and wherein the first and second actuators are actuable to place the powder plow in an extended position with respect to the build surface

The recoater assembly of any previous clause, wherein, in the extended position, at least a portion of the powder plow is in contact with the working surface.

The recoater assembly of any previous clause, wherein the second actuator is configured to be placed in a neutral state, and when the second actuator is placed in the neutral state, the powder plow is configured to be elevated away from the working surface to a partially retracted position in response to a force applied to the powder plow.

The recoater assembly of any previous clause, further comprising a roller bearing coupled to the powder plow, and wherein the roller bearing is configured to follow a ramp element to apply the force to the powder plow.

The recoater assembly of any previous clause, wherein at least one of the first and second actuators comprises a pneumatic cylinder.

The recoater assembly of any previous clause, further comprising one or more sensors configured to detect a position of the powder plow with respect to the working surface.

The recoater assembly of any previous clause, wherein the first actuator comprises a spring return actuator.

The recoater assembly of any previous clause, wherein the second actuator is a double acting actuator.

An apparatus for additively manufacturing a three-dimensional object, the apparatus comprising: a working surface including a build platform on which a three-dimensional object is formed from a powder build material; a ramp element positioned proximate the working surface and defining a lift surface having a contoured profile; and a recoater assembly movable across the working surface in a first direction, the recoater assembly comprising a powder plow positioned to move the powder build material across the working surface as the recoater assembly is moved in the first direction, wherein the powder plow is configured to engage the lift surface to raise the powder plow with respect to the working surface from an extended position to a partially retracted position as the recoater assembly is moved in the first direction.

The apparatus of any previous clause, wherein the recoater assembly comprises a roller bearing coupled to the powder plow, the roller bearing engageable with the lift surface.

The apparatus of any previous clause, wherein the roller bearing is configured to follow the contoured profile as the recoater assembly is moved in the first direction.

The apparatus of any previous clause, wherein the contoured profile defines a peak located a defined distance above the working surface, and wherein the recoater assembly comprises a sensor configured to detect that the roller bearing has reached the peak.

The apparatus of any previous clause, wherein the recoater assembly comprises at least one actuator coupled to the powder plow, the at least one actuator actuable to raise and lower the powder plow with respect to the working surface.

The apparatus of any previous clause, wherein the at least one actuator comprises a pneumatic cylinder.

The apparatus of any previous clause, wherein the recoater assembly comprises: a base member, and wherein the powder plow is pivotably coupled to the base member; an arm having a first end portion and a second end portion opposite the first end portion, and wherein the arm is pivotably coupled to the base member at a location of the arm between the first and second end portions; a first actuator coupled between the base member and the first end portion; and a second actuator coupled between the second end portion and the powder plow; and wherein the first and second actuators are actuable to place the powder plow in contact with the working surface in the extended position.

The apparatus of any previous clause, wherein the powder plow comprises at least one wing element configured to direct the powder build material toward an inward portion of the working surface as the recoater assembly is moved in the first direction.

The apparatus of any previous clause, wherein the recoater assembly comprises one or more sensors configured to detect a vertical position of the powder plow with respect to the working surface.

An additive manufacturing method, comprising: moving a recoater assembly over a working surface during a forward stroke in a first direction to provide a powder build material over the working surface, the recoater assembly comprising a powder plow located in a retracted position with respect to the working surface while moving in the first direction; actuating one or more actuators at a return area to position the powder plow in an extended position with respect to the working surface; placing at least one actuator of the one or more actuators in a neutral state to enable movement of the powder plow in a direction away from the working surface; and moving the recoater assembly over the working surface during a return stroke in a second direction opposite the first direction, wherein during at least a portion of the return stroke, the powder plow is elevated away from the working surface from the extended position to a partially retracted position.

The method of any previous clause, further comprising: detecting, via at least one sensor during the return stroke, a vertical position of the powder plow with respect to the working surface; and responsive to detecting the vertical position of the powder plow is within a defined range above the working surface, actuating the at least one actuator to maintain the powder plow at the partially retracted position.

The method of any previous clause, wherein the at least one actuator comprises a pneumatic cylinder, and wherein detecting comprises detecting a position of a piston rod of the pneumatic cylinder.

A recoater assembly for an additive manufacturing system, the recoater assembly comprising: a base member movable across a working surface in a forward stroke in a first direction and in a return stroke in a second direction opposite the first direction, the working surface including a build platform on which a three-dimensional object is formed from a powder build material; a powder plow movably coupled to the base member to enable vertical movement of the powder plow with respect to the working surface, the powder plow positionable to be in contact with the working surface at a return area of the working surface, the powder plow configured to move the powder build material across the working surface during the return stroke; and a powder plow lift mechanism configured to elevate the powder plow away from being in contact with the working surface to a partially retracted position during at least a portion of the return stroke.

The recoater assembly of any previous clause, further comprising one or more actuators actuable to place the powder plow in contact with the working surface.

The recoater assembly of any previous clause, wherein the powder plow lift mechanism is configured to contact a ramp element positioned proximate the working surface during at least the portion of the return stroke.

The recoater assembly of any previous clause, wherein the powder plow lift mechanism comprises one or more roller bearings coupled to the powder plow, the one or more roller bearings positioned to contact the ramp element.

The recoater assembly of any previous clause, wherein the ramp element comprises a contoured lift surface that is followed by the roller bearing, the contoured lift surface defining a peak located a defined distance away from the working surface, and wherein the powder plow lift mechanism comprises a counterweight coupled to the powder plow, the counterweight configured to maintain a vertical position of the powder plow in response to the roller bearing reaching the peak during the return stroke.

The recoater assembly of any previous clause, further comprising one or more sensors configured to detect a vertical position of the powder plow with respect to the working surface.

The recoater assembly of any previous clause, wherein the powder plow comprises one or more wing elements positioned proximate to a periphery of the working surface, the one or more wing elements positioned at an acute angle with respect to the first direction to direct the powder build material toward an inward portion of the working surface as the base member is moved in the first direction.

The recoater assembly of any previous clause, wherein the powder plow lift mechanism comprises a counterweight coupled to the powder plow, and wherein the powder plow is configured to contact a tipping mechanism at or near the return area to cause the powder plow to be placed in contact with the working surface.

The recoater assembly of any previous clause, wherein the counterweight is configured to maintain the powder plow in a retracted position with respect to the working surface during the forward stroke until the powder plow engages the tipping mechanism.

An additive manufacturing system including a working surface including a build platform on which a three-dimensional object is formed from a powder build material and a recoater assembly configured to distribute the powder build material over the working surface for forming the three-dimensional object, wherein the recoater assembly includes a powder plow for moving the powder build material over the working surface, the additive manufacturing system comprising: one or more actuation devices coupled to the powder plow, the one or more actuation devices actuable to move the powder plow vertically with respect to the working surface; and a controller configured to control the one or more actuation devices, and wherein the controller is configured to: actuate the one or more actuators to position the powder plow in an extended position at a return area of the working surface; and control at least one actuator of the one or more actuators to be placed in a neutral state to enable the powder plow to be moved vertically away from the working surface during at least a portion of a return stroke of the recoater assembly from the extended position to a partially retracted position, the return stroke in a direction opposite a direction of the forward stroke.

The additive manufacturing system of any previous clause, wherein the controller is configured to, responsive to detecting a position of the powder plow during the return stroke within a defined range above the working surface, actuate the at least one actuator to maintain the powder plow in the partially retracted position.

The additive manufacturing system of any previous clause, further comprising one or more sensors configured to detect the powder plow being within the defined range.

The additive manufacturing system of any previous clause, wherein the one or more actuation devices comprise one of more pneumatic cylinders.

The additive manufacturing system of any previous clause, further comprising one or more flow control devices fluidly coupled to a fluid supply and the one of more pneumatic cylinders.

The additive manufacturing system of any previous clause, wherein the controller is configured to control the one or more flow control devices to control actuation of the one or more pneumatic cylinders.

The additive manufacturing system of any previous clause, further comprising one or more sensors configured to detect the powder plow being within the defined range based on a position of at least one piston rod of the one or more pneumatic cylinders.

The additive manufacturing system of any previous clause, wherein the one or more sensors comprise one or more analog sensors.

The additive manufacturing system of any previous clause, wherein the one or more sensors comprise proximity sensors.

An apparatus for additively manufacturing a three-dimensional object, the apparatus comprising: a working surface defining a build platform on which a three-dimension object is formed from a powder build material and a table extending about at least a portion of the build platform; a ramp element positioned on the table and defining a lift surface having a contoured profile; a recoater assembly movable across the working surface in a first direction in a forward stroke and in a second direction in a return stroke, the second direction opposite the first direction, the recoater assembly comprising a powder plow positioned to move the powder build material across the working surface as the recoater assembly is moved in the return stroke; and a trip element engageable with the powder plow to cause the powder plow to move into contact with the table at or near an end of the forward stroke, wherein the powder plow is configured to engage the lift surface to raise the powder plow with respect to the working surface as the recoater assembly is moved in the return stroke.

The apparatus of any previous clause, further comprising a counterweight coupled to the powder plow.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

## Claims

1. A recoater assembly (118) for an additive manufacturing system (100), the recoater assembly (118) comprising:
a base member (150) movable across a working surface (116) in a forward stroke in a first direction (144) and in a return stroke in a second direction (146) opposite the first direction (144), the working surface (116) including a build platform (106) on which a three-dimensional object is formed from a powder build material (114);
a powder plow (152) coupled to the base member (150) and configured to move at least a portion of the powder build material (114) with respect to the working surface (116) during the return stroke;
one or more actuators (160) coupled to the powder plow (152), the one or more actuators (160) actuable to provide vertical movement of the powder plow (152) with respect to the working surface (116); and
a controller (124) operable to control at least one actuator (160) of the one or more actuators (160) to:
maintain the powder plow (152) in a retracted position while traversing the working surface (116) during at least a portion of the forward stroke;
lower the powder plow (152) to an extended position when the powder plow (152) is at or near a return area with respect to the working surface (116);
enable the powder plow (152) to be lifted from the extended position to a partially retracted position a predefined vertical distance from the working surface (116); and
maintain the powder plow (152) in the partially retracted position while traversing a portion of the working surface (116) corresponding to the build platform (106) during the return stroke.

2. The recoater assembly (118) of claim 1, wherein the powder plow (152) comprises at least one wing element (260) positioned proximate to a periphery of the working surface (116), the at least one wing element (260) positioned at an acute angle with respect to the second direction (146).

3. The recoater assembly (118) of claim 1, wherein the powder plow (152) comprises a first powder plow (152A), and further comprising a second powder plow (152B) spaced apart from the first powder plow (152A).

4. The recoater assembly (118) of claim 3, wherein the second powder plow (152B) comprises at least one wing element (260) positioned to be in contact with the working surface (116) when the base member (150) is moved in the second direction (146).

5. The recoater assembly (118) of claim 1, further comprising:
an arm (162) having a first end portion (164) and a second end portion (166) opposite the first end portion (164), and wherein the arm (162) is pivotally coupled to the base member (150) at a location of the arm (162) between the first and second end portions (164, 166); and
wherein the one or more actuators (160) comprise:
a first actuator (160) coupled between the base member (150) and the first end portion (164); and
a second actuator (160) coupled between the second end portion (166) and the powder plow (152).

6. The recoater assembly (118) of claim 5, wherein the controller (124) is operable to control the first and second actuators (160) to place the at least one powder plow (152) in the extended position.

7. The recoater assembly (118) of claim 6, wherein the controller (124) is operable to place the second actuator (160) in a neutral state to enable the powder plow (152) to be elevated to the partially retracted position in response to a force applied to the powder plow (152).

8. The recoater assembly (118) of claim 7, further comprising a roller bearing (218) coupled to the powder plow (152), and wherein the roller bearing (218) is configured to follow a ramp element (212) to apply the force to the powder plow (152).

9. The recoater assembly (118) of claim 1, wherein the one or more actuators (160) comprise at least one pneumatic cylinder (170).

10. The recoater assembly (118) of claim 9, further comprising at least one flow control device (230) fluidly coupled to the at least one pneumatic cylinder.

11. The recoater assembly (118) of claim 10, wherein the controller (124) is operable to control the at least one flow control device (230) to control an actuation of the at least one pneumatic cylinder (170).

12. The recoater assembly (118) of claim 1, further comprising one or more sensors (200) configured to detect a vertical position of the powder plow (152) with respect to the working surface (116).

13. The recoater assembly (118) of claim 1, wherein the powder plow (152) is pivotably coupled to the base member (150).

14. A method for operating a recoater assembly (118) of an additive manufacturing system (100), the method comprising:
moving the recoater assembly (118) across a working surface (116) during a forward stroke in a first direction (144) to provide a powder build material (114) over the working surface (116), the working surface (116) including a build platform (106) on which a three-dimensional object is formed from the powder build material (114), the recoater assembly (118) comprising a powder plow (152) located in a retracted position with respect to the working surface (116) during at least a portion of the forward stroke;
actuating one or more actuators (160) to lower the powder plow (152) to an extended position when the powder plow (152) is at or near a return area with respect to the working surface (116);
lifting the powder plow (152) from the extended position to a partially retracted position a predefined vertical distance from the working surface (116); and
controlling the one or more actuators (160) to maintain the powder plow (152) in the partially retracted position while traversing a portion of the working surface (116) corresponding to the build platform (106) during a return stroke, wherein the return stroke is in a second direction (146) opposite the first direction (144).

15. The method of claim 14, further comprising:
detecting, via at least one sensor (200) during the return stroke, a vertical position of the powder plow (152) with respect to the working surface (116).
